# EUROPÄISCHE PATENTSCHRIFT

(11) **EP 1 301 969 B1**
(45) Veröffentlichungstag und Bekanntmachung des Hinweises auf die Patenterteilung: **19.10.2005**
(21) Anmeldenummer: 01953926.1
(22) Anmeldetag: 13.07.2001
(51) Int. Cl.: H01S 5/50, H04B 10/17, G02F 2/00

(54) **OPTISCHER WELLENLÄNGENKONVERTER**
ALL-OPTICAL WAVEGUIDE COMPONENT SERVING AS A CONVERTER COMPRISING A SATURABLE AMPLIFYING REGION AND USES THEREOF
COMPOSANT GUIDE D'ONDE PUREMENT OPTIQUE UTILISE EN TANT QUE CONVERTISSEUR, COMPRENANT UNE ZONE D'AMPLIFICATION POUVANT ETRE SATUREE, ET SES UTILISATIONS

(30) Priorität: 14.07.2000 DE 10035843; 25.04.2001 DE 10121079
(43) Veröffentlichungstag der Anmeldung: 16.04.2003
(73) Patentinhaber: Fraunhofer-Gesellschaft zur Förderung der angewandten Forschung e.V., 80686 München (DE)
(72) Erfinder: NOLTING, Hans-Peter, 12353 Berlin (DE); WÜNSCHE, Hans-Jürgen, 13051 Berlin (DE)
(86) Internationale Anmeldenummer: PCT/DE2001/002646
(87) Internationale Veröffentlichungsnummer: WO 2002/007346

(56) Entgegenhaltungen:
- WO-A-96/41405
- D'OTTAVI A ET AL: "FOUR-WAVE MIXING IN SEMICONDUCTOR OPTICAL AMPLIFIERS: A PRACTICAL TOOL FOR WAVELENGTH CONVERSION" IEEE JOURNAL OF SELECTED TOPICS IN QUANTUM ELECTRONICS, IEEE SERVICE CENTER, US, Bd. 3, Nr. 2, 1. April 1997 (1997-04-01), Seiten 522-527, XP000735952 ISSN: 1077-260X
- MARCENAC D D ET AL: "Bandwidth enhancement of wavelength conversion via cross-gain modulation by semiconductor optical amplifier cascade" ELECTRONICS LETTERS, IEE STEVENAGE, GB, Bd. 31, Nr. 17, 17. August 1995 (1995-08-17), Seiten 1442-1443, XP006003270 ISSN: 0013-5194

## Beschreibung

Die Erfindung bezieht sich auf reinoptisches Wellenleiterbauelement als Konverter mit einer sättigbaren Verstärkerregion für Datenpulse der Bitrate b₀ in optischen Übertragungssystemen zur Aufmodulation eines Eingangssignals, das einem primären Trägersignal der Wellenlänge λ₁ aufmoduliert ist, auf ein im Wellenleiterbauelement gleichlaufendes, am Eingang des Wellenleiterbauelements noch unmoduliertes Trägersignal der Wellenlänge λ₂, in der Form, dass am Ausgang des Wellenleiterbauelements ein verstärktes Ausgangssignal der Wellenlänge λ₁ und ein verstärktes, moduliertes Ausgangssignal der Wellenlänge λ₂ zur Verfügung stehen, und mit einer Gesamtlänge der Verstärkerregion, die größer als die für eine maximale Signalverstärkung bis in die Sättigung erforderliche Länge ist, und auf Verwendungen des reinoptischen Wellenleiterbauelements als Konverter mit einer sättigbaren Verstärkerregion, insbesondere in der Funktion eines schnellen Entscheiders.

Wellenlängen-Konverter in klassischer Bauform, mit denen die Pulsfolge eines Signals von einer Trägerwelle auf eine andere übertragbar ist, sowie in modifizierter Bauform sind aus dem Stand der Technik bekannte Bauelemente. Vergleiche beispielsweise für Laser-Konverter: R.J.S. Pederson et al., "Simple wavelength conversion for bit rate independent operation up to 10 Gbit/s" Tech. Dig. of OFC'94 paper ThQ3, San Jose, Califomia , Feb.1994; H. Yasaka et al., "Repeated wavelength conversion of 10 Gbit/s signal using wavelength tuneable semiconductor lasers", IEEE Photon. Tech. Lett. vol.7 pp.161-163, 1995; für Konverter mit durchgängig aktiven Komponenten; M. Schilling et al., "Wavelength converter based on integrated all-active three-port Mach-Zehnder interferometer", Electron. Lett. , vol.30, pp.2128-2129, Dec. 1994; C. Janz et al., "All-active dual-order mode Mach-Zehnder wavelength converter for co-propagative operation" Electron. Lett. vol.34 pp.1848-1849, 1998; und für Konverter mit Kombinationen aus aktiven und passiven Komponenten : B. Mikkelsen et al., "Wavelength conversion using interferometric structures containing semiconductor laser amplifiers" , Optical amplifiers and their app., OSA Tech. Dig. Series, vol.18 pp.238-241, 1995.

Einfache bekannte Wellenlängen-Konverter bestehen aus einem halbleitenden optischen Verstärker (SOA) zur invertierten Signalkonvertierung aufgrund der Kreuzgewinn-Modulation innerhalb eines Verstärkungsmediums, das eine parallele Wellenausbreitung ermöglicht. Dabei werden die diskreten Wellenlängen-Seitenbänder zur Trägerwellenlänge, die das zu konvertierende optische Pulssignal darstellen, auf die unmodulierte Trägersignalwellenlänge übertragen und auch optisch aufgearbeitet. Der SOA hat eine Baulänge, die für eine Erreichung der maximalen Verstärkung bei entsprechend, d.h. abhängig vom Verstärkermedium gewählter Trägerwellenlänge erforderlich ist. Im Allgemeinen handelt es sich hierbei um kurze Baulängen im Bereich von ≤1 mm. Außerdem werden die Baulängen bewusst so gering wie möglich gehalten, um als Nebeneffekt auch eine einfache Integration des Konverters in komplexe Schaltungsaufbauten zu ermöglichen. Zur Erreichung der maximalen Verstärkung bei der Signalkonvertierung sind größere Baulängen auch deshalb nicht anzutreffen, weil im Sättigungsgebiet des Verstärkers eine Verringerung der Verstärkung und damit eine Verringerung der diesbezüglichen Signalqualität auftritt. Eine Verstärkung nach Erreichen der Sättigung wird also nicht angestrebt. Komplexere Wellenlängen-Konverter können als Mach-Zehnder-Interferometer mit zwei parallelen Armen ausgeführt sein, in die jeweils ein SOA integriert ist. Bei derartig aufgebauten Konvertem besteht der Vorteil, dass an einem Konverter-Ausgang auch das nicht-invertierte Signal zur Verfügung steht. Bei den bekannten Konvertem ist die Hauptaufgabe eine sichere Signalumsetzung möglichst mit Erreichung erhöhter Extinktion. Aspekte wie hohe Übertragungsraten ≥100 Gbit/s und Pegelangleichung der Datenpulse wurden bisher nicht beobachtet.

Aus der **DE-OS 195 35 772** ist ein Verfahren zur reinoptischen Konversion der Trägerwellenlänge eines optisch übertragenen Datensignals bekannt, bei dem ein SOA der beschriebenen Art zur Wellenlängenkonversion durch ausschließliche Kreuz-Gewinn-Modulation unter gleichzeitiger, nur begrenzter Regenerierung der Signalamplitude und -form verwendet wird. Zur Erreichung eines nichtinvertierten Ausgangssignals zur Vermeidung eines hohen Signalpegelunterschieds, wird bei diesem bekannten SOA die Zeitkonstante τ (Trägerlebensdauer) durch verschiedene, an sich bekannte Verfahren emiedrigt. Es ist jedoch auch bekannt, dass selbst die durch die Emiedrigung schnellsten SOA immer noch eine Trägerlebensdauer τ von ungefähr 200 ps (für den bekannten SOA wird konkret nur ein τ von 1 ns für eine Datenrate von 5 Gbit/s genannt) aufweisen, sodass nur Datenraten in einem Bereich von bis zu 40 Gbit/s erreichbar sind, die jedoch für zukünftige, hochleistende optische Datennetze nicht interessant sind. Dies gilt auch im Hinblick auf die zu erreichende Signalqualität.

Weiterhin ist es aus der Veröffentlichung von D'Ottavi et al., "Four wave mixing in semiconductor optical amplifiers: a practical tool for wavelength conversion", IEEE Journal of selected Topics in Quantum electronics, IEEE Service Center, US, Bd. 3, Nr. 2, 1.April 1997 (1997-04-01), Seiten 522-627, ISSN: 1077-260X) bekannt, die Konvertereffizienz durch Wellenlängenkonversion mit einem Wellenlängen-Konverter von maximal 2 mm Baulänge nach dem Prinzip der Vierwellen-Mischung verbessern zu wollen, wobei jedoch keine Erhöhung der Datenrate erzielt werden soll. Eine gezielte Auswahl der Wellenlängen für die Eingangssignale im Hinblick auf eine Erzielung gleicher Leistungspegel der Ausgangssignale erfolgt hier ebenfalls nicht.

Für reinoptische Signalprozesse, auch im Hinblick auf zukünftige photonische Netzwerke, ist unter Anderem eine schnelle Aufarbeitung von Datenströmen an den Ein- und Ausgängen durch ein Equalizer-Bauelement zwingend erforderlich. Hierbei sollen insbesondere zur Aufhebung auftretender Pulsvariationen die Amplituden der einer logischen "1" zugeordneten return-to-zero Bit-Pulse auf möglichst hohem Niveau einander angeglichen und zur Erhöhung der Bitrate sowie zur Erreichung konstanter Bitbreite die Flanken der Pulse nachgeformt und verbessert werden. Eine derartige Aufarbeitung der optischen Pulse vereinfacht und verbessert deren nachfolgende Verarbeitungen, beispielsweise in Regeneratoren, Wellenlängen-Konvertem, optischen Entscheidem, Multiplexem und Demultiplexern. Neben den reinoptisch arbeitenden Konvertern, deren Funktionsweise als Equalizer bislang nicht befriedigend ist, ist aus dem Stand der Technik eine Reihe von elektronisch unterstützten Equalizem unterschiedlicher Bauarten bekannt. Das Hauptproblem bei jeder elektronisch unterstützten Anpassung ist die Langsamkeit des elektronischen Signalkreises, der einen Einsatz der beschriebenen Bauelemente für hochratige Übertragungssysteme relativ schnell begrenzt oder nicht ermöglicht. Bei der vorliegenden Erfindung werden dagegen Pulsangleichungen für optische Pulse bei Bitraten angestrebt, die deutlich höher sind als elektronisch verarbeitbar.

Neben der Signalregeneration durch das beschriebene "Reshaping" und "Reamplification" mittels eines Equalizers ist auch das "Retiming" über einen optischen Entscheider von ausschlaggebender Bedeutung für die Signalübertragung, insbesondere bei den zu immer höheren Werten steigenden Bitraten. Bei einem optischen Entscheider handelt es sich um einen schnellen Schalter mit einer Schwellwertfunktion. Der Schaltzeitpunkt wird festgelegt durch ein Clocksignal, das mit dem zeitlich zu korrigierenden Einganssignal frequenzgleich und phasensynchron vorliegen muss. Die Trägerfrequenzen der beiden Signale sind unterschiedlich. Die Amplitude eines durchgeschalteten Pulses wird durch den Schwellwert im Schalter festgelegt, bei dem er öffnet bzw. schließt ("1" und "0" bits, Puls oder kein Puls). Im Allgemeinen werden die Eingangssignale im Entscheider noch verstärkt, wohingegen der Zeit- und Amplituden-Jitter reduziert werden muss. In herkömmlichen Entscheidern werden beispielsweise ein selbstpulsierender Laser für die hochgenaue und störungsarme Regenerierung des Clocksignals und ein nicht-lineares Mach-Zehnder-Interferometer (MZI) als Schalttor für das Clocksignal eingesetzt. Das MZI, das zur Vereinfachung der Herstellung meist polarisationsabhängig arbeitet, besteht aus zwei Kopplern mit dazwischen angeordneten parallelen Armen, in denen je ein sättigbarer, optischer Verstärker zur Erzeugung von Signal- Verstärkungen und -Phasenverschiebungen angeordnet ist, sodass sich die verzögerten Signale im zweiten Koppler entsprechend überlagem und am Ausgang eine "1" oder eine "0" ansteht. Aufgrund des hohen Einflusses von Photonendichteänderungen des Eingangssignals im nicht-linearen Mach-Zehnder-Interferometer ist diese bekannte Architektur aber wiederum begrenzt auf Übertragungsraten in der Größenordnung zwischen 40 Gbit/s und 100 Gbit/s.

Der **Stand der Technik,** von dem die Erfindung ausgeht, wird in der **WO 96/41405** offenbart. Es wird ein reinoptisches Wellenleiterbauelement in Form eines sättigbaren, halbleitenden optischen Verstärkers (SOA) mit reiner Kreuz-Gewinn-Modulation oder reiner Kreuz-Phasen-Modulation (Mach-Zehnder-Interferometer als Demultiplexer) zur Wellenlängenkonversion für gleiche Ausgangswellenlängen beschrieben. Ferner wird eine andere Art der Wellenlängenkonversion für Vier-Wellen-Mischung für unterschiedliche Ausgangswellenlängen beschrieben. Ziel bei dem bekannten SOA ist das Erreichen einer vergrößerten Übertragungs-Bandbreite ohne Berücksichtigung von regenerativen Eigenschaften. Es soll eine einfache Signalkopie zur Wellenlängenumsetzung bei einer möglichst hohen Datenrate erstellt werden. Dazu wird die Gesamtlänge des SOA größer gewählt als die für maximale Signalverstärkung bis in die Sättigung erforderliche Länge, die - wie oben erwähnt - in einem Bereich bis 1 mm liegt. Der bekannte SOA weist daher eine Gesamtlänge in einem bevorzugten Bereich zwischen 1 mm und 5 mm auf, wodurch eine Erhöhung der Datenrate von 10 Gbit/s auf 28 Gbit/s, 35 Gbit/s oder wiederum maximal 40 Gbit/s in Abhängigkeit von der gewählten Gesamtlänge erreichbar ist. Die Begrenzung der Gesamtlänge ist dadurch gegeben, dass das Erreichen eines dann nicht mehr zu verbessernden Endzustandes am SOA-Ausgang in Abhängigkeit vom gewählten Anfangszustand der Eingangssignale angestrebt wird. Die Wellenlängen der Eingangssignale bei dem bekannten SOA sind beide auf derselben Seite der charakteristischen Wellenlänge zur Erreichung maximaler Verstärkung gewählt, sodass sie im SOA unterschiedliche Verstärkungen erfahren, was sich auf die Ausgangssignale durch Unterschiede in ihren Signalpegeln auswirkt. In der Ausbildung als optischer Schalter werden bei dem bekannten SOA verschiedene Ausgangswellenlängen eingesetzt, sodass ebenfalls unterschiedliche Signalpegel der Ausgangssignale erzeugt werden. Eine Pegelgleichheit ist hier ebenfalls nicht zu erzielen, sodass kein Schwellwertverhalten zu beobachten ist, das Voraussetzung für unterschiedliche Funktionsausbildungen des SOA ist.

Ein der Erfindung zugrunde liegender erster Teilaspekt der Aufgabe ist deshalb darin zu sehen, ein reinoptisches Wellenleiterbauelement als Konverter mit einer sättigbaren Verstärkerregion der eingangs genannten Art so weiterzubilden, dass unter Einbeziehung seiner regenerativen Eigenschaften auch höchste und ultrahohe Übertragungsraten von 160 Gbit/s, 640 Gbit/s und mehr erreichbar sind. Dabei hat sich bei der Würdigung des Standes der Technik gezeigt, dass ein solches reinoptisches Wellenleiterbauelement in verschiedenen Ausbildungsformen mit unterschiedlichen Funktionen zur Anwendung kommen kann. Deshalb besteht der zweite Teilaspekt der Aufgabe darin, neben der Erzielung extrem hoher Übertragungsraten auch ein reinoptisches Wellenleiterbauelement als Konverter mit einer sättigbaren Verstärkerregion zur Verfügung stellen zu können, der flexibel in seinen Ausbildungen ist und durch einfache Maßnahmen in Form verschiedener Bauelemente unterschiedlicher Funktionen ausbildbar ist. Dabei soll die erreichbare Qualität der Funktionserfüllung in der jeweiligen Ausbildung höchsten Ansprüchen genügen, sodass auch bezüglich der Pulsqualität und -lage sehr anspruchsvolle optische Komponenten mit den aufbereiteten Pulsen ohne weiteres beaufschlagt werden können. Daneben soll das erfindungsgemäße reinoptische Wellenleiterbauelement einfach, störunanfällig und kostengünstig in seinem Aufbau sein.

Als Lösung für diesen Aufgabekomplex ist bei dem erfindungsgemäßen reinoptischen Wellenleiterbauelement der gattungsgemäßen Art mit einer Gesamtlänge der optisch aktiven Verstärkerregion, die größer als die für eine maximale Signalverstärkung bis in die Sättigung erforderliche Länge ist, deshalb vorgesehen, dass die Gesamtlänge im Bereich des Zehn- bis Hundertfachen der für eine Sättigung erforderlichen Länge liegt, dass zur Erzeugung eines Schwellwertverhaltens das unmodulierte Trägersignal am Eingang des Wellenleiterbauelements eine gegenüber der Signalleistung des primären Trägersignals wesentlich geringere, aber deutlich von Null verschiedene, positive Signalleistung aufweist und dass die Wellenlänge λ₁ des primären Trägersignals (PCS) und die Wellenlänge λ₂ des unmodulierten Trägersignals (CW-IN) symmetrisch zur charakteristischen Wellenlänge für die maximale signalverstärkung des Wellenleiterbauelementes (SOA) gewählt sind, so dass sie im Wellenleiterbauelement eine gleiche Verstärkung zur Erzielung einer Gleichheit der beiden Ausgangssignale in ihrer maximalen Amplitude erfahren.

Dabei ist das reinoptische Wellenleiterbauelement als Konverter mit einer sättigbaren Verstärkerregion gemäß einer Erfindungsfortführung in Form eines sättigbaren, halbleitenden optischen Verstärkers (SOA) oder in Form einer nichtlinearen Glasfaser mit Raman-Verstärkung ausbildbar. Hierbei handelt es sich gleichsam um zwei verschiedene Materialausführungen für das Wellenleiterbauelement nach der Erfindung, in denen jedoch die gleichen, für die vorliegende Erfindung relevanten physikalischen Vorgänge auftreten und die deshalb als äquivalent anzusehen sind. In beiden wird eine Wechselwirkung zwischen zwei copropagierenden Wellen unter dem Einfluss von Vierwellen-Mischangseffekten und nichtlinearer Verstärkung hervorgerufen. Vorteil der lichtführenden Glasfaser mit Raman-Verstärkung ist die Möglichkeit einer sehr steilen Nichtlinearität, sodass zur Ereichung maximaler Verstärkung bis in die Sättigung sehr kurze Fasern eingesetzt werden können. In der Praxis ist jedoch der sättigbare, halbleitende optische Verstärker (SOA) weiter verbreitet als die verstärkende Glasfaser, sodass in den nachfolgenden Ausführungen in der Hauptsache auf diese Ausgestaltung des reinoptischen Wellenleiterbauelements nach der Erfindung Bezug genommen wird. Alle Ausführungen, auch im speziellen Beschreibungsteil, gelten aber in analoger Form auch für die nichtlineare Glasfaser mit Raman-Verstärkung.

Des Weiteren ist das erfindungsgemäße Wellenleiterbauelement, das als reinoptisches Bauelement durch eine besonders lange Bauform und eine gleiche Verstärkung für die eingehenden Signale bei deren Konvertierung zu den Ausgangssignalen charakterisiert ist, durch eine Variabilität der Zusammensetzung des Eingangssignals flexibel ausbildbar. Zum einen ist gemäß einer ersten Weiterbildung der Erfindung vorgesehen, dass bei dessen Ausbildung als schneller Equalizer zur synchronen Amplitudenangleichung und Pulsformung beider Ausgangssignale das Eingangssignal ein Datensignal mit anderen ist gemäß einer alternativen Erfindungsfortführung vorgesehen, dass bei dessen Ausbildung als schneller Entscheider zum Pulsschalten das Eingangssignal aus einem Datensignal mit einer bis zu ultrahohen Bitrate und einem Clocksignal zusammengesetzt ist, das zum Datensignal mit einem Versatz von einem Bruchteil, insbesondere der Hälfte, der Bitperiode synchronisiert ist und eine zum Datensignal ähnliche Signalleistung aufweist. Ausgehend von dieser Ausbildung des Wellenleiterbauelements nach der Erfindung als schneller Entscheider kann dieser durch entsprechende Wahl des Eingangssignal noch weitere Ausbildungsformen annehmen. Insbesondere kann bei einer Ausbildung des schnellen Entscheiders als schneller Demultiplexer das Clocksignal von einem Maskensignal ähnlicher Signalleistung überlagert sein, das den Schalttakt für das Schaltfenster des Demultiplexers vorgibt. Daneben kann für das Wellenleiterbauelement nach der Erfindung vorgesehen sein, dass dieses zusammen mit einem weiteren Wellenleiterbauelement als schnelle Entscheider in eine nichtlineare Mach-Zehnder-Interferometer-Anordnung oder in eine dieser ähnliche gleichläufige Interferometer-Anordnung integriert sind. In der zuletzt genannten Ausbildung können vom dem Wellenleiterbauelement nach der Erfindung dann alle Funktionen eines Mach-Zehnder-Interferometers auch für ultrahohe Bitraten übernommen werden, die bislang nur für niedrige Bitraten ausführbar waren. Insbesondere kann es sich hierbei um die Ausführung von Bauelementen mit Logik- und Umschaltfunktionen handeln. Für ein dem Mach-Zehnder-Interferometer ähnliches gleichläufiges Interferometer kommt insbesondere ein polarisationsabhängiges UNI-Interferometer in Betracht. Zu den ultrahohen Datenbitraten zählen solche in einem Bereich bis 1000 Gbit/s (1 Tbit/s). Interessant sind in diesem Bereich aber auch die für die optische Telekommunikation in nächster Zukunft wichtigen Hierarchiestufen von 160 Gbit/s und 640 Gbit/s. Gegenüber den im Stand der Technik erreichbaren Datenbitraten in einem Bereich von 40 Gbit/s bis 100 Gbit/s liegt bei dem erfindungsgemäßen Wellenleiterbauelement also eine deutliche Steigerungsfähigkeit vor.

Im Folgenden werden einige Erläuterungen zur grundsätzlichen Funktionsweise des Wellenleiterbauelements nach der Erfindung gegeben, die auf dem Wechselwirkungsprinzip im Konverter beruht. Das Wellenleiterbauelement kann gedanklich in zwei Abschnitte unterteilt werden. Im ersten Abschnitt, der bei einer Länge im Bereich von ≤1 mm mit üblich eingesetzten Verstärkern übereinstimmt, wird das Eingangssignal zunächst während der Konvertierung bis in die Sättigung des Verstärkers verstärkt und ein invertiertes Signal auf dem begleitenden unmodulierten Trägersignal durch Kreuz-Gewinn-Modulation erzeugt, die in diesem ersten Abschnitt dominiert. Die Extinktion des erzeugten Signals ist bekanntlich geringer als die des Eingangssignals. In einem zweiten Abschnitt, der sich direkt an den ersten anschließt und mindestens die zehnfache Länge des ersten Abschnitts aufweist, also bei einer üblichen Verstärkerlänge von 1 mm mindestens 10 mm lang ist, werden die maximal verstärkten Pulse durch Vier-Wellen-Mischung, die im zweiten Abschnitt dominiert, einander angeglichen und in ihrer Pulsform verbessert. Als erste Bedingung für die hohe Funktionalität ist daher die erforderliche relativ große Länge des erfindungsgemäßen Wellenleiterbauelements anzusehen, die eine gezielte Kombination der unterschiedlichen Wirkprinzipien auf die gleichlaufenden Signale bewirkt. Theoretisch ist eine Trennung der beiden Abschnitte voneinander möglich. Wenn die Eingangssignale am Eingang des zweiten Abschnitts bereits die maximale Verstärkung erfahren haben, könnte der erste Abschnitt entfallen. Da dieser sich aber vom zweiten Abschnitt nicht unterscheidet, ist die Kombination von beiden Abschnitten besonders sinnvoll und einfach. Die erforderliche Verstärkung erfolgt dann nicht über ein anderes Bauelement.

Im zweiten Abschnitt des Wellenleiterbauelements nach der Erfindung kann beobachtet werden, dass die Photonendichten an jedem Ort annähernd konstant sind. Dies ist ein Ergebnis der Wechselwirkung zwischen den interaktiv miteinander in Verbindung stehenden Trägersignalen, von denen das unmodulierte Trägersignal die invertierte Kopie des Eingangssignals auf dem primären Trägersignal trägt, sodass an jedem Punkt die Summe der Photonen für beide Signale konstant ist. Die Summe aus den Photonenintensitäten ist dann konstant. Hierbei handelt es sich um die zweite Bedingung für das Funktionsprinzip des erfindungsgemäßen Wellenleiterbauelements, die gleichbedeutend mit dem Erreichen einer konstanten mittleren Elektronendichte am Ausgang des Wellenleiterbauelements ist. Dadurch hat dieses im zeitlichen Mittel eine konstante Brechzahl und weist nur sehr geringe Störungen auf. Der Ausgleich kann erreicht werden durch eine symmetrische Wahl der Wellenlängen der Träger- und Eingangssignale zur charakteristischen, materialabhängigen Wellenlänge der Verstärkerregion des erfindungsgemäßen Wellenleiterbauelements, bei der maximale Verstärkung erreicht wird. Üblicherweise wird bei einem herkömmlichen Verstärker diese charakteristische Wellenlänge für das primäre Trägersignal gewählt. Eine Wahl der Wellenlängen in einem relativ flachen Maximalbereich der Verstärkungskurve bewirkt ebenfalls den gewünschten gleichverstärkenden Effekt. Bei dem erfindungsgemäßen Wellenleiterbauelement bewirkt die angestrebte Verstärkungsgleichheit, die beispielsweise in Form einer Signaljustierung mittels Verschiebung des Bandgap durch eine Materialveränderung erreicht werden kann, den gewünschten Ausgleichseffekt. Der Bandgap von III-V-Materialien, die bevorzugt zum Aufbau des erfindungsgemäßen Wellenleiterbauelements eingesetzt werden, liegt zwischen 1200 nm und 1650 nm. Dabei ist zu bemerken, dass durch den Kopplungseffekt nicht nur das mit dem invertierten Datensignal beaufschlagte unmodulierte Trägersignal qualitativ verbessert wird, sondern auch das primäre Trägersignal durch Amplitudenbeschränkung aufgrund der Verstärkungssättigung. Am Ausgang des erfindungsgemäßen Wellenleiterbauelements stehen damit zwei Ausgangssignale mit identischen Amplituden, d. h. gleichem Leistungspegel an. Asymmetrische Amplituden wären hier ein Hinweis auf eine unzureichende Funktionsweise der sättigbaren Verstärkerregion, wodurch eine Kontrollmöglichkeit gegeben ist. Das primäre Trägersignal kann dann ohne Weiteres in der Signalkette weiterverwendet werden und zwar mit dem Vorteil, dass es als nicht-invertiertes Signal vorliegt, sodass keine nachfolgenden Invertierungsvorrichtungen erforderlich sind.

Die Symmetriebedingung gilt auch für die Wahl der Signalleistungen. Der beschriebene Ausgleichseffekt kann nämlich nicht beobachtet werden, wenn das unmodulierte Trägersignal weggelassen wird oder eine zu niedrige Leistung aufweist. In diesem Fall kann im ersten Abschnitt des Wellenleiterbauelements keine Kopie des Eingangssignals von dem primären auf das unmodulierte Trägersignal erfolgen. Eine Kopplung der beiden die Signale tragenden Lichtwellen ist ebenso wie die abhängige Pulsbearbeitung dann nicht möglich. Als dritte Bedingung für das Funktionieren des erfindungsgemäßen Wellenleiterbauelements ist daher die richtige Wahl der Leistungen der Trägersignale zu benennen. Eine Folge des Photonen-Ausgleichseffekts ist die Erzielung einer sehr geringen Zeitkonstante im Bauelement. Die bislang in der Erholungszeit einer gesättigten halbleitenden optischen Verstärkerregion mit langer Zeitkonstante als Antwort auf einen kurzen Puls auftretenden äußerst flachen Pulsflanken ("tails") werden im Verlauf des langen Wellenleiterbauelements vollständig eliminiert. Nur die steilen Flanken, die eine stationäre Erhaltungsgröße im erfindungsgemäßen Wellenleiterbauelement darstellen, werden ausgenutzt, was die absolute Highspeed-Operationsfähigkeit bis hin zu den genannten ultrahohen Bitraten von mehreren hundert Gbit/s bis zu einem Tbit/s des erfindungsgemäßen Wellenleiterbauelements in allen Ausbildungen mit unterschiedlichen Funktionen begründet.

Der für die hervorragenden Eigenschaften des Wellenleiterbauelements als Konverter mit einer sättigbaren Verstärkerregion nach der Erfindung hauptverantwortliche Effekt ist in der von den genannten drei Bedingungen abhängigen schnellen Photonenwechselwirkung zwischen den Signalen zu sehen. Dabei ist der Gleichlauf ("co-propagation") zwischen dem primären und dem unmodulierten Trägersignal durch das Wellenleiterbauelement von ausschlaggebender Bedeutung für den physikalischen Effekt, der bei einem Gegenlauf der Signale nicht auftritt. Dem zugrunde liegt die Erkenntnis über die nicht-lineare Verstärkungsunterdrückung in der langen, sättigbaren Verstärkerregion des Wellenleiterbauelements nach der Erfindung, die im Bereich der maximalen Verstärkung liegt und durch Einfluss von Fremdphotonen hoher Dichte hervorgerufen wird. Die nicht-lineare Verstärkungsunterdrückung stellt eine Bandbegrenzung für die mit dem erfindungsgemäßen Wellenleiterbauelement übertragbaren Wellenlängenbereiche dar (Kanalabstände). Mit dem nicht-linearen Verstärkungskoeffizient ε werden die Dämpfungseinflüsse der Transienten durch das Wellenleiterbauelement berücksichtigt. Dämpfung kann beispielsweise durch spektrales Lochbrennen, Materialaufheizung, stehende Wellen (Vier-Wellen-Mischung) und strukturabhängig entstehen. Der nicht-lineare Verstärkungskoeffizient ε beschreibt die Verringerung der optischen Verstärkung (gain) in Abhängigkeit von der Photonenintensität S : gain = gain_{(S=0)} / (1+εS). Der Wertebereich des nichtlinearen Verstärkungskoeffizienten ε ist gut bekannt. Typische Werte liegen zwischen 1*10⁻²³m³ und 7*10⁻²³ m³.

Die nicht-lineare Verstärkungsunterdrückungs-Zeitkonstante τ_{ε} beschreibt die Verzögerungsantwort aufgrund der Verstärkungsunterdrückung durch momentane Änderungen in der Photonendichte. Beispielsweise brennt ein spektrales Loch für eine begrenzte Zeit und verschwindet dann wieder. Typische Werte für die nicht-lineare Verstärkungsunterdrückungs-Zeitkonstante τ_{ε}, die damit allein die Form der zu übertragenden Pulse beeinflusst und das Geschwindigkeitspotenzial für die Übertragungsrate des Wellenleiterbauelement nach der Erfindung festlegt (bei τ_{ε} = 200 fs sind derzeit Übertragungsraten bis 1000 Gbit/s möglich), sind gut von der Vier-Wellen-Mischung bekannt und liegen in einem Bereich zwischen 100 fs und ein paar ps. Die erforderliche, relativ große und daher eher ungewöhnliche Länge des erfindungsgemäßen Wellenleiterbauelements bewegt sich dabei durchaus noch in einem akzeptablen Bereich, der auch einen Einbau in komplexere optische Schaltungen ohne Weiteres ermöglicht. Auch die im Sättigungsgebiet der Verstärkerregion des Wellenleiterbauelements nach der Erfindung auftretende Abschwächung der Verstärkung kann akzeptiert werden, da insgesamt das Angleichungsniveau der Pulse immer noch sehr hoch ist und die Verbesserung der Pulsqualität zu einer Kompensation des Verlustes führt.

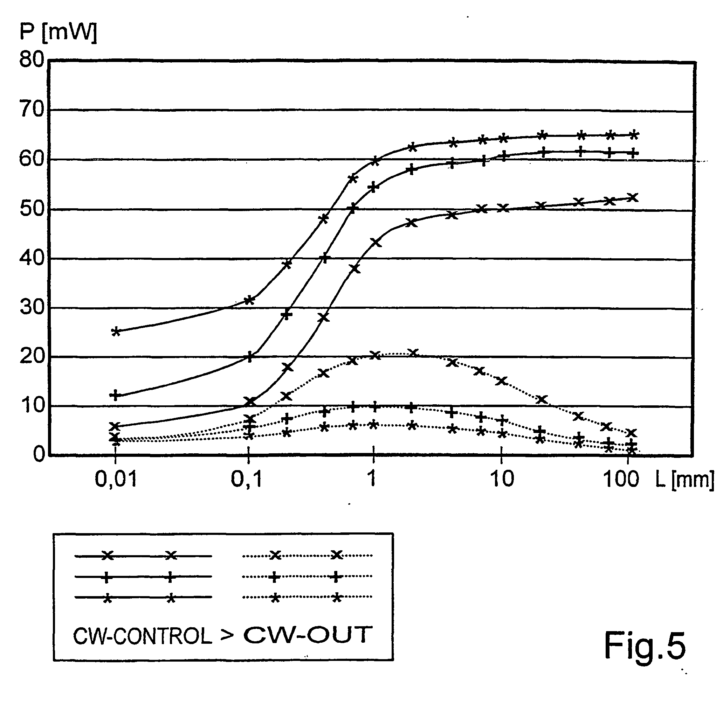

Die physikalische Grundlage für das beschriebene regenerierende Verhalten des erfindungsgemäßen Wellenleiterbauelements bildet ein schwellwertabhängiges Schaltverhalten für zwei oder mehr optische Wellen. Gibt man beispielsweise zwei unmodulierte Trägersignale mit unterschiedlichen Start-Amplituden (vgl. **Figur 5**) auf den Eingang des erfindungsgemäßen Wellenleiterbauelements, so kann unter dem Einfluss des weiter oben beschriebenen nicht-linearen Verstärkungs-Unterdrückungseffekts bei der Vier-Wellen-Mischung ein Schwellwertverhalten (in Analogie zur digitalen Elektronik) beobachtet werden. In der Figur 5 ist die Anfangsleistung des einen Trägersignals immer konstant niedrig. Die Anfangsleistung des anderen Trägersignals variiert dem gegenüber zwar, ist jedoch immer größer. Deutlich ist zu erkennen, dass jeweils das Signal mit der größeren Anfangsleistung sehr viel schneller über die Länge des erfindungsgemäßen Wellenleiterbauelements anwächst als das Signal mit der kleineren Anfangsleistung. Am Ende des Bauelements wird dieses gegen Null gedrängt und unterdrückt. Dieser Effekt kann für einen optischen Schalter in der Funktion eines Entscheiders (Puls wird durchgeschaltet : "1"-bit oder Puls wird nicht durchgeschaltet : "0"-bit) verwendet werden. Ob ein eingehender Datenpuls verstärkt oder unterdrückt wird, hängt vom materialabhängigen Schwellwert im Wellenleiterbauelement ab, durch den eindeutig die Grenze zwischen "1"- und "0"-bits festgelegt ist, nach der die zulässige Extinktionsabweichung der Datenpulse zu bemessen ist, um eine zuverlässige Pulserkennung zu gewährleisten.

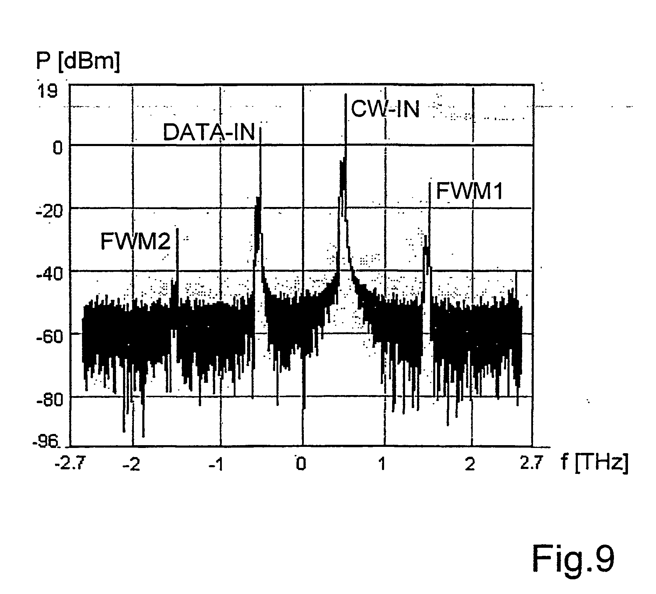

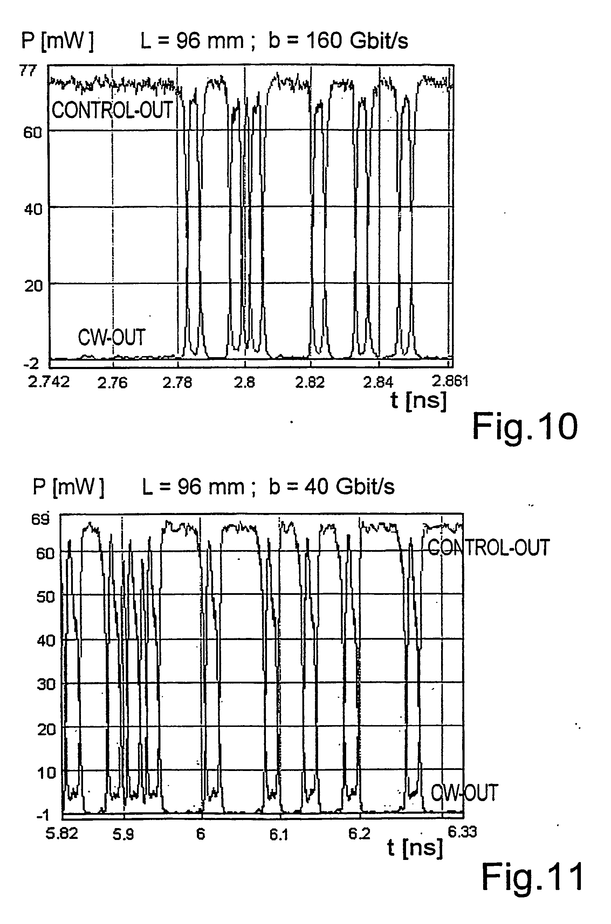

Die Erklärung für das zu beobachtende schwellwertabhängige Schaltverhalten kann von dem grundsätzlichen Verhalten bei der Vier-Wellen-Mischung abgeleitet werden. Hier erzeugen die beiden Hauptwellen in der Hauptsache zwei neue Nebenwellen mit gespiegelten Wellenlängen bzw. Frequenzen (vgl. **Figur 9**). Während des Erzeugungsprozesses wird entsprechend Energie von den beiden Hauptwellen auf die beiden Nebenwellen übertragen. Aus der entsprechenden Lösung der Wanderwellen-Gleichungen unter Berücksichtigung der Verstärkungssättigung wird erkennbar, dass der Energietransport als absolute Größe unabhängig von der Anfangsenergie der Hauptwellen erfolgt. Das bedeutet, dass der relative Verlust für die schwächere Welle größer ist als für die stärkere Welle, was zu dem beschriebenen schwellwertabhängigen Schaltverhalten führt. Im Fall der Signalkonfigurierung für das Wellenleiterbauelement nach der Erfindung, bei der ein unmoduliertes Trägersignal mit geringer Leistung und ein primäres Trägersignal mit deutlich höherer Leistung auf den Eingang gegeben werden, wird im ersten (kurzen) Längenabschnitt (sättigbare Verstärkerregion) des Wellenleiterbauelements eine inverse Kopie ("dunkle Photonen") der Daten auf das unmodulierte Trägersignal erzeugt (Kreuz-Gewinn-Modulation). Beim weiteren Durchlaufen des zweiten (langen) Längenabschnitts (gesättigte Verstärkerregion) des Wellenleiterbauelements nach der Erfindung führt das zuvor beschriebene schwellwertabhängige Schaltverhalten zu einem Ansteigen der Amplituden beider Signale bis auf gleiches maximales Niveau (Vier-Wellen-Mischung). Die Pulsflanken sind sehr steil und hängen nach der längeren Durchlaufzeit - auch bei geringen Datenbitraten - nur noch von der nicht-linearen Verstärkungsunterdrückungs-Zeitkonstanten τ_{ε} ab (vgl. **Figuren 10, 11**).

Um den schwellwertabhängigen Schalteffekt in einem schnellen Entscheider als Bauelement nutzen zu können, ist eine Festlegung des Schaltzeitpunktes für durchzulassende Datenpulse erforderlich. Dies erfolgt bei dem erfindungsgemäßen Wellenleiterbauelement durch die Überlagerung des Datensignals mit einem synchronisierten Clocksignal als zusammengesetztes Eingangssignal. Dabei werden bei der Signalauslegung die grundlegenden Bedingungen für die Funktionsfähigkeit des erfindungsgemäßen Wellenleiterbauelements beachtet. Statt eines einzelnen Datensignals als Eingangssignal (wie beim Equalizer) werden nunmehr Daten- und Clocksignal in ihrer Wellenlänge so ausgewählt, dass gleiche Ausgangsamplituden erzielt werden. Das Wellenleiterbauelement nach der Erfindung in der Ausbildung als schneller Entscheider ist damit ebenfalls ein einfaches und kompaktes reinoptisches Bauelement, das keine zusätzlichen Eingänge oder Komponenten für den Schaltentscheidungsprozess benötigt. In Abhängigkeit von der durch Zeitjitter bedingten Qualität des regenerierten Clocktaktes für den Schaltzeitpunkt können somit ultraschnelle Schaltentscheidungen mit geringem Jitter durchgeführt werden. Beispielsweise kann gemäß einer vorteilhaften Erfindungsausgestaltung das Clocksignal mittels eines selbstpulsierenden Mehrsektionslasers frequenzstabil regeneriert werden (vgl. **EP 0 818 069 B1**). Dadurch entfallen unbefriedigende Selektionsprozesse.

Bei den in Abhängigkeit vom Schwellwert des Wellenleiterbauelements invertiert durchgeschalteten Datenpulsen treten noch zusätzlich die Pulsverbesserungen (Verstärkung, Reduzierung von Amplituden- und Zeitjitter, Pulsformverbesserung) wie beim schnellen Equalizer auf. Bei den gesperrten Datenpulsen wird als inverse Kopie der Clockpuls durchgeschaltet, dessen Form damit die Form des neuen Pulses bestimmt. Dafür müssen als zusätzliche Bedingungen die beiden Signale zeitlich um eine halbe Bitperiode überlagert sein ("Clock-interleaved-Data" CiD). Im Wellenleiterbauelement nach der Erfindung werden die CiD - Signale dann auf das unmodulierte Trägersignal als inverses Datenschema kopiert. Ein Datenpuls zwischen zwei Maxima des Clocksignals erzeugt einen in Form und Amplitude durch die zusätzliche Equalizerfunktion regenierten "0"-Puls im unmodulierten Trägersignal, wohingegen ein "0"-Puls im Datensignal zwischen zwei Maxima im Clocksignal einen neuen Puls im unmodulierten Trägersignal erzeugt. Die Form dieses neuen Pulses hängt ausschließlich von der Form des Clockpulses ab, der bei einer guten Regenerierung einen geringen Jitter und eine bessere Pulsform als die Datenpulse aufweist. Das bedeutet, dass die Ausgangsgangssignale des Wellenleiterbauelements in Entscheiderarchitektur 3R-regeneriert sind. Dabei ist zu bemerken, dass die Datenbits zwar in invertierter Form am Ausgang zur Verfügung stehen, es sich aber bei allen Pulsen - im Gegensatz zum einfachen Kopieren des Datensignals in der Verstärkerregion als Konverter mit Kreuzverstärkungsschema - um "echte" Pulse mit einer erhöhten Photonendichte im Trägersignal im Gegensatz zu den sogenannten "dunklen" Pulsen mit einer niedrigen Photonendichte in einer hohen Photonendichte im Trägersignal handelt.

In der Ausbildung als schneller Entscheider kann Wellenleiterbauelement nach der Erfindung noch fortführende Ausgestaltungen als Demultiplexer oder MZI-Funktionselement erfahren. Hierfür ist die Wahl bestimmter Signalkombinationen als Eingangssignal erforderlich. Die Aufgabe eines Demultiplexers ist es, nur jeweils ein bestimmtes Datenbit im Datenstrom durchzuschalten, sodass eine Aufteilung des Datenstroms auf verschiedene Pfade erfolgt. Wird jetzt dem Clocksignal beim schnellen Entscheider ein Maskensignal überlagert, kann dieser Effekt problemlos erreicht werden. Das Eingangssignal setzt sich dann aus dem Datensignal, dem Clocksignal und dem Maskensignal zusammen. Der gebildete Demultiplexer kann dann auch für ultrahohe Bitraten eingesetzt werden, wobei immer auch noch eine 3R-Aufbereitung der Datenpulse stattfindet. Ähnliches gilt für eine Integration des erfindungsgemäßen Wellenleiterbauelements in eine MZI-Anordnung. Das Eingangssignal setzt sich nunmehr aus zwei Datensignalen, die zu vergleichen sind im MZI, und dem synchronisierten Clocksignal zusammen. Damit sind logische Bauelemente, beispielsweise XOR- oder AND-Glieder realisierbar, die alle Vorteile des erfindungsgemäßen Wellenleiterbauelements aufweisen, insbesondere seine Highspeed-Fähigkeit und die gute Signalregeneration.

Ein grundsätzliches Problem bei optischen Wellenleiterbauelementen stellen die Reflexionen an dessen Endfacetten dar. Fehlfunktionen in Form überlagerter stark schwankender Pulsamplituden können für beide Ausbildungen als schneller Equalizer und Entscheider auftreten, wenn der Reflexionskoeffizient zu gering ist. Erst eine hinreichend gute Entspiegelung mit einem Reflexionsfaktor in einem Bereich von 10⁻⁴ bis 10⁻⁵ gewährleistet eine ausreichend gute Störunterdrückung. Diese ist insbesondere wichtig, wenn gemäß einer weiteren Ausgestaltung des erfindungsgemäßen Wellenleiterbauelements in einer Ausbildung als schneller Equalizer oder Entscheider vorgesehen ist, dass dieses zusammen mit weiteren Wellenleiterbauelementen derselben Ausbildung unter Zwischenschaltung von optischen Isolatoren in einer linearen Kaskade mit geringen Kopplungsverlusten zwischen den einzelnen Wellenleiterbauelementen angeordnet ist, wobei diese an ihren beiden Enden gute Entspiegelungen zur Vermeidung von Reflexionseffekten aufweisen. Kopplungsverluste bis max. 15 dB sind dabei aufgrund der integrierten Verstärkungsfunktion ohne Weiteres akzeptabel.

Zusammenfassend gesehen sind für das Wellenleiterbauelement nach der Erfindung in der Ausbildung als schneller Equalizer eine Reihe von Vorteilen zu nennen, durch die er sich für viele verschiedene Anwendungen eignet. Bei bevorzugten Anwendungen kann es sich dabei um eine Verwendung als Vorschalteinrichtung mit einer freien Wahl der Wellenlängen und der Polarisationsebene der Trägersignale sowie der Amplitude und Form der Datenpulse für einen reinoptischen Schaltkreis oder insbesondere auch um eine Verwendung als Polarisationskonverter mit fester Ausgangspolarisation für Datensignale mit bis zu ultrahoher Bitrate handeln. Zu den Vorteilen zählt zunächst die Bauelementausführung in Form eines einfachen langen sättigbaren, halbleitenden optischen Verstärkers. Ein derartiges Bauelement ist einfach polarisationsunabhängig auszuführen, was bei einem MZI mit Verstärkern sehr viel schwieriger ist. Eine besonders bedeutende Anwendung findet das Wellenleiterbauelement nach der Erfindung in der Ausbildung eines schnellen Equalizers und/oder Entscheiders in einem 3R-Generator für bis zu ultahohe Bitraten in einem reinoptischen Schaltkreis. Derartige Regeneratoren sind insbesondere am Eingang größerer optischer Schaltkreise zu finden. Schließlich können die Ausgangssignale des schnellen Equalizers in weiteren Sektionen des optischen Übertragungsnetzes genutzt werden, wobei sie in zueinander invertierter Form vorliegen, was z.B. in elektronischen Schaltkreisen heute sinnvoll genutzt werden kann.

Nachfolgend werden zum weiteren Verständnis des reinoptischen Wellenleiterbauelements als Konverter mit einer sättigbaren Verstärkerregion nach der Erfindung allgemein und in beispielhaft gewählten Ausbildungsformen eines sättigbaren, halbleitenden optischen Verstärkers (kurz "SOA") verschiedene **Figuren** mit einem Blockschaltbild und charakteristischen Diagrammen zu den unterschiedlichen Ausbildungsformen näher erläutert. Dabei zeigt:
- **Figur 1**: ein Blockschaltbild eines SOA mit den relevanten Parametern und möglichen Ausbildungsvarianten,
- **Figur 2**: für eine Ausbildung eines SOA als schneller Equalizer eine Serie von in einer Simulationsrechnung erstellten Augendiagrammen bei einer Übertragungsrate von 160 Gbit/s,
- **Figur 3**: für eine Ausbildung eines SOA als schneller Equalizer eine Serie von in einer Simulationsrechnung erstellten Augendiagrammen bei einer Übertragungsrate von 10 Gbit/s,
- **Figur 4**: ein Diagramm zur Wellenlängenwahl der Signale zur Erreichung möglichst gleicher Verstärkung.
- **Figur 5**: für eine Ausbildung eines Wellenleiterbauelements als schneller Entscheider das Schwellwertverhalten bei unterschiedlichen Leistungsverhältnissen zwischen unmodulierten Signalen,
- **Fig. 6, 7, 8**: das Schwellwertverhalten bei der Überlagerung eines modulierten Signals mit einem unmodulierten Signal,
- **Figur 9**: das Vier-Wellen-Mischverhalten eines SOA,
- **Fig. 10, 11**: für eine Ausbildung eines SOA als schneller Entscheider das Solitonverhalten bei zwei verschiedenen Übertragungsraten,
- **Fig. 12, 13**: für eine Ausbildung eines SOA als schneller Entscheider den Signalverlauf an Ein- und Ausgang des SOA,
- **Fig. 14,15,16**: für eine Ausbildung eines SOA als schneller Entscheider eine Serie von in einer Simulationsrechnung erstellten Augendiagrammen bei einer Übertragungsrate von 160 Gbit/s,
- **Fig. 17... 20**: für eine Ausbildung des schnellen Entscheiders als schneller Demultiplexer die time-domain-Spektren der Signale,
- **Figur 21**: den schematischen Aufbau einer Mach-Zehnder-Interferometer-Anordnung mit integrierten schnellen Entscheidern

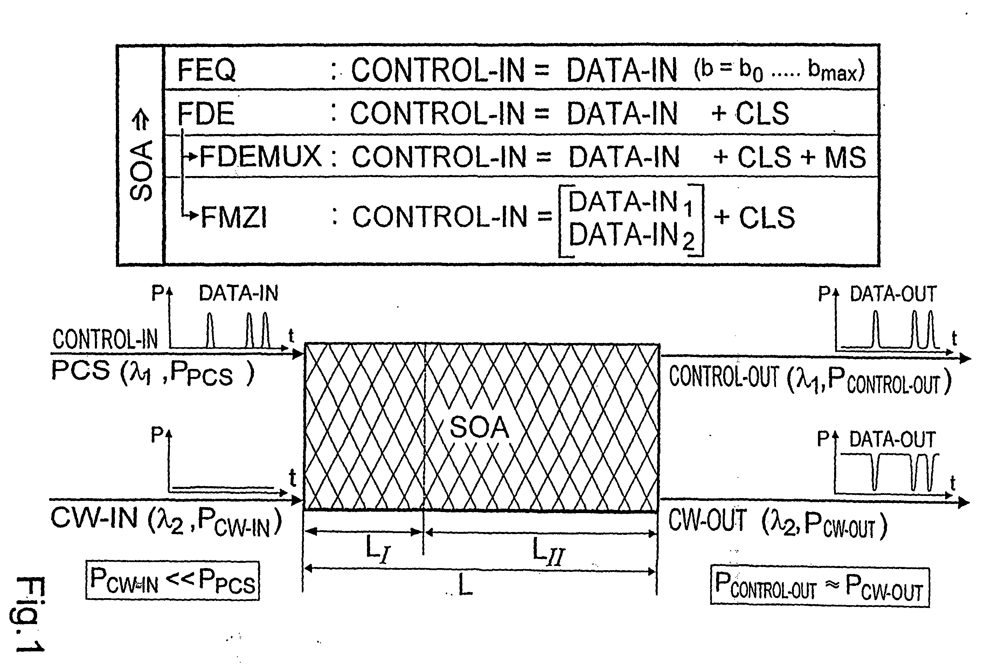

Dem Blockdiagramm gemäß **Figur 1** ist eine schematische Darstellung eines sättigbaren, halbleitenden optischen Verstärker SOA als bevorzugte Ausbildungsform des reinoptischen Wellenleiterbauelements nach der Erfindung zu entnehmen, in dem die Zuordnung der einzelnen Parameter näher erläutert wird. Der Verstärker **SOA** ist die zentrale optische Komponente sowohl in einer reinoptischen Ausbildung als schneller Equalizer **FEQ** als auch als schneller Entscheider **FDE.** Er arbeitet in der Grundfunktion eines auf der Kreuzgewinn-Modulation basierenden Konverters und weist Gesamtlänge **L** auf. Auf den Eingang des Verstärkers **SOA** werden ein optisches primäres Trägersignal **PCS** mit der Trägerwellenlänge λ₁ und ein optisches unmoduliertes Trägersignal **CW-IN** ("continous wave") mit der Wellenlänge λ₂ geleitet, sodass beide Wellen den Verstärker **SOA** im Gleichlauf durchlaufen. Das primäre Trägersignal **PCS** ist mit einem optischen Eingangssignal **CONTROL-IN** mit amplitudenveränderlichen Pulsen der zwischen einem minimalen und einem maximalen Wert veränderlichen Bitrate **b**_{**o**}**,** ... **b**_{**max**} moduliert und weist eine relativ hohe Signalleistung **P**_{**PCS**} (16 mW) auf. Das unmodulierte Trägersignal **CW-IN** weist demgegenüber eine deutlich geringere, aber immer noch deutlich von Null verschiedene Signalleistung **P**_{**CW**} (≤ 1 mW) auf (**P**_{**CW-IN**} **<<P**_{**PCS**}). Am Ausgang des Verstärkers **SOA** stehen zwei verstärkte Ausgangssignale **CONTROL-OUT, CW-OUT** (moduliert) der unterschiedlichen Wellenlängen λ₁, λ₂ zur Verfügung, die im **SOA** eine möglichst gleiche Verstärkung erfahren haben, sodass sie in ihrer maximalen Amplitude "**P**_{**CONTROL-OUT**}**, P**_{**CW-OUT**} ungefähr gleich sind (**P**_{**OUTS**} = **P**_{**INVS**}).

**Anmerkung** : Der besseren Anschauung wegen sind die verschiedenen Signale am Verstärkereingang getrennt voneinander dargestellt. In praktischen Bauelement-Ausführungen werden sie jedoch zunächst über einen Fasersplitter/-combiner vereinigt und dann gemeinsam über den einzigen Verstärkereingang eingekoppelt. Analoges gilt für den einzigen Verstärkerausgang. Vorteilhafterweise müssen also nicht mehrere Fasem an- bzw. ausgekoppelt werden.

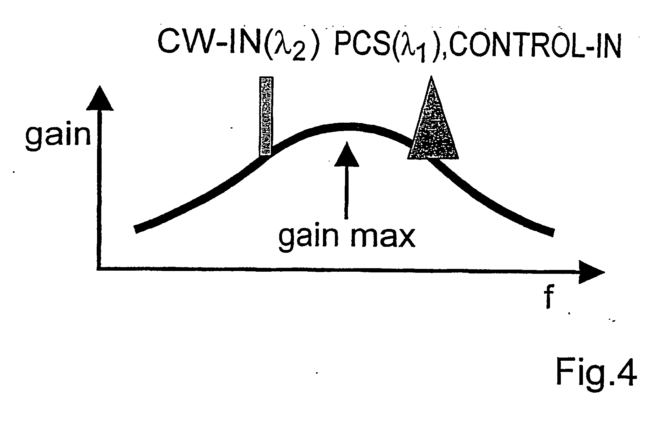

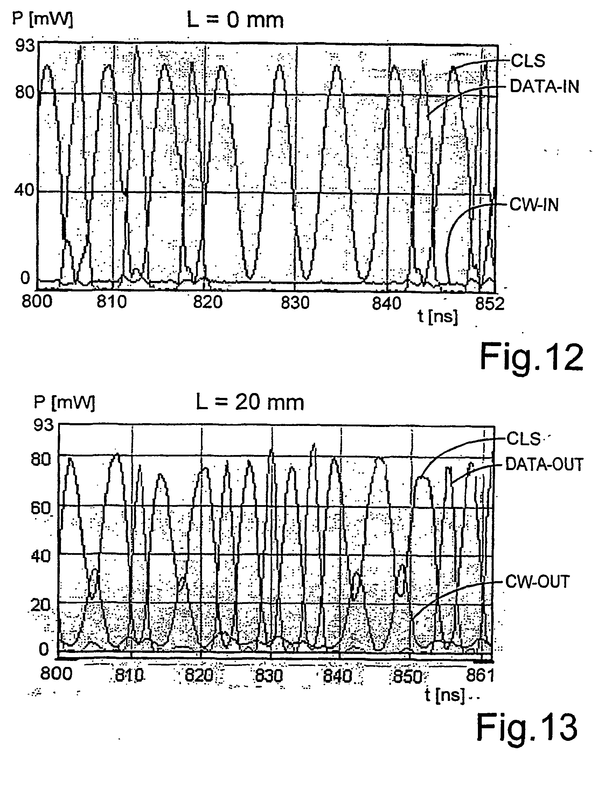

Für eine Ausbildung des Verstärkers SOA als schneller Equalizer **FEQ** wird das Eingangsignal **CONTROL-IN** ausschließlich von einem Datensignal **DATA-IN** auf der Trägerwellenlänge λ₁ gebildet. Ist dagegen der Verstärker **SOA** als schneller Entscheider **FDE** ausgebildet, so besteht das Eingangsignal **CONTROL-IN** aus dem Datensignal **DATA-IN** und einem dazu mit einem konstanten Versatz (halbe Bitperiode) synchronisiert überlagerten Clocksignal **CLS** ("clock-interleaved-data", vergleiche **Figur 12**). Bei einer Weiterbildung des schnellen Entscheiders **FDE** zu einem schnellen Demultiplexer **FDEMUX** ist dem Clocksignal **CLS** noch ein Maskensignal **MS** zur Festlegung des Schaltfensters überlagert. Bei einer Integration von zwei schnellen Entscheidern **FDE** in einer Mach-Zehnder-Anordnung **FMZI** besteht das Eingangssignal **CONTROL-IN** aus zwei Datensignalen **DATA-IN**_{**1**}**, DATA-IN**_{**2**} und dem Clocksignal **CLS.** Mit einer derartigen **FMZI**-Anordnung können alle bekannten Logik- und Umschaltfunktionen auch für ultrahohe Übertragungsraten **b**_{**max**} unter gleichzeitiger, umfassender Pulsverbesserung ausgeführt werden. In Abhängigkeit von der gewählten Logiktabelle, beispielsweise **XOR,** wird von der **FMZI-**Anordnung ein Signal nach Maßgabe der anstehenden Datensignale **DATA-IN**_{**1**}**, DATA-IN**_{**2**} getaktet durchgeschaltet. Im Verstärker **SOA** konvertiert das jeweilige Eingangssignal **CONTROL-IN** ([**DATA-IN**] oder [**DATA-IN + CLS**] oder [**DATA-IN + CLS + MS**] oder [**DATA-IN**_{**1**} **+ DATA-IN2 + CLS**]) dann von dem primären Trägersignal **PCS** auf das unmodulierte Trägersignal **CW-IN,** sodass die Ausgangssignale **CONTROL-OUT, CW-OUT** erzeugt werden. Dabei sind alle den Verstärker **SOA** durchlaufenden Signale in ihrer Wellenlänge bezüglich der charakteristischen Wellenlänge des Verstärkers SOA für maximale Verstärkung immer so gewählt, dass sie eine möglichst gleiche Verstärkung in ihrer maximalen Signalamplitude erfahren (**P**_{CONTROL-OUT} ≈ **P**_{CW-OUT}) (vergleiche **Figur 4**).

Beide Ausgangssignale **CONTROL-OUT, CW-OUT** sind im Falle des schnellen Equalizers **FEQ** qualitativ wesentlich verbessert und entsprechend weiterverwendbar. Das Datensignal **DATA-OUT** ist in allen Ausbildungsformen deutlich in seiner Amplitude angehoben und im Pulspaket angeglichen (Reamplification) sowie in seiner Pulsform verbessert (Reshaping). Bei einer Ausbildung des Verstärkers **SOA** als schneller Entscheider **FDE** ist das Datensignal **DATA-OUT** noch zusätzlich durch das verwendete Clocksignal **CLS** zeitlich richtiggestellt (Retiming), sodass hier insgesamt eine optimale "3R-Regeneration" auch für ultrahohe Bitraten **b**_{**max**} vorliegt.

Weiterhin ist in dem Blockdiagramm gemäß **Figur 1** dargestellt, dass die kopierende Konvertierung des Eingangssignals **CONTROL-IN** von dem primären Trägersignal **PCS** auf das unmodulierte Trägersignal **CW-IN** in einem ersten Abschnitt des Verstärkers **SOA** der Länge **L**_{**I**} von ungefähr 1 mm erfolgt, in dem eine Verstärkung **gain**_{**max**} bis in den Sättigungsbereich des Verstärkers **SOA** erreicht wird (Kreuz-Gewinn-Modulation). In einem zweiten Abschnitt des Verstärkers SOA erfolgt durch Kopplung zwischen den Signalen (Vier-Wellen-Mischung) dann die Angleichung der Pulse in Amplitude und Form und ggfs. in der Zeit. Dabei beträgt die Länge **L**_{**II**} des zweiten Abschnitts mindestens das Zehnfache der Länge **L**_{**I**} des ersten Abschnitts. Für kleine Amplitudenunterschiede zwischen "1" und "0" Signaldarstellungen kann die Länge **L**_{**II**} auch noch um einiges länger sein, insbesondere bis zum Hundertfachen oder prinzipiell sogar beliebig lang sein. Die gewählte Gesamtlänge **L** des Verstärkers **SOA** hängt also von dem Pulshöhenverhältnis ("Extinktion") zwischen einem "0"-Puls und einem "1"-Puls im Eingangssignal und von der Nicht-Linearität des eingesetzten Verstärkermaterials ab. Für eine Extinktion von 10 dB ist eine Gesamtlänge **L** in einem Bereich von 10 mm ausreichend. Für eine sehr geringe Extinktion muss die Gesamtlänge **L** relativ groß sein, beispielsweise für eine Extinktion von 0,8 dB bis 1,2 dB muss die Gesamtlänge **L** in Abhängigkeit vom gewählten Ort der gleichen Verstärkung ungefähr 100 mm betragen, was aber ohne Weiteres realisierbar ist.

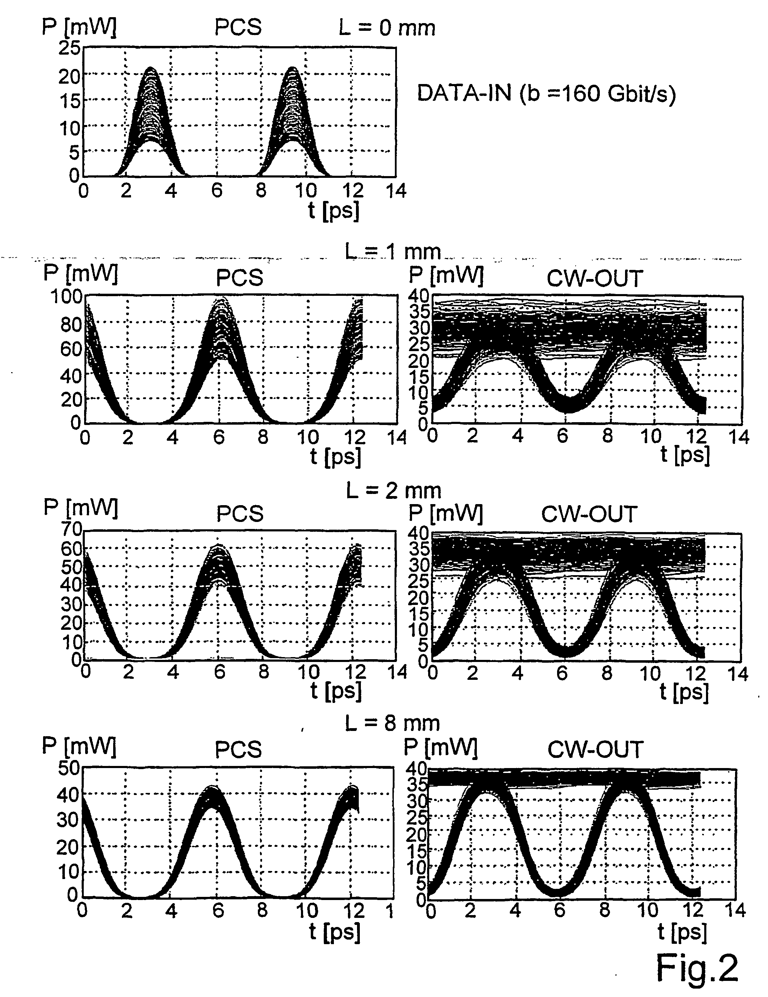

In der **Figur 2** ist eine Serie von Augendiagrammen für die Signale an einem Verstärker **SOA** als schneller Equalizer **FEQ** in Abhängigkeit von der Gesamtlänge **L** des Verstärkers **SOA** dargestellt. Das Augendiagramm (überdeckende Auftragung aller auftretenden Pulsamplituden (Leistung P in mW) im Signal über der Zeit **t** in ns/ps, hier redundant für zwei Bits) eines auf den Equalizer **FEQ** geleiteten originalen, das **RZ**-Datensignal **DATA-IN** tragenden primären Trägersignals **PCS** mit einer sehr hohen Übertragungsrate **b** von 160 Gbit/s und einer für das gezeigte Ausführungsbeispiel gewählten Amplitudenvariation zwischen 7 mW und 22 mW (zur Darstellung der erreichbaren Signalamplitudenangleichung) ist in der obersten Zeile der Diagrammserie dargestellt. Darunter sind dann für durchwanderte Gesamtlängen **L** des Verstärkers SOA von 1 mm, 2 mm und 8 mm jeweils die durch die selbsttätige Modulation veränderten Pulse im primären Trägersignal **PCS** und im unmodulierten Trägersignal **CW-OUT** dargestellt. Die auftretende Phasenverschiebung in der Diagrammserie ist durch die willkürliche Wahl des Augennullpunkts hervorgerufen und nicht von Bedeutung. Bei dem unmodulierten Trägersignal **CW-OUT** ist deutlich die Veränderung der bereits erwähnten langen "tails" bis zu ihrer vollständigen Eliminierung bei einer Gesamtlänge **L** von 8 mm zu erkennen, was die funktionelle Schnelligkeit des Equalizers **FEQ** zeigt. Bei beiden Signalen ist längenabhängig eine Amplitudenangleichung auf hohem Niveau und einer Verbesserung der Pulsform durch steilere Flanken deutliche zu erkennen. Die dadurch bedingte Vergrößerung des Auges ist sicheres Indiz für die optimale Wirkungsweise des sättigbaren, halbleitenden optischen Verstärkers **SOA** als ultraschneller Self-Equalizer **FEQ.**

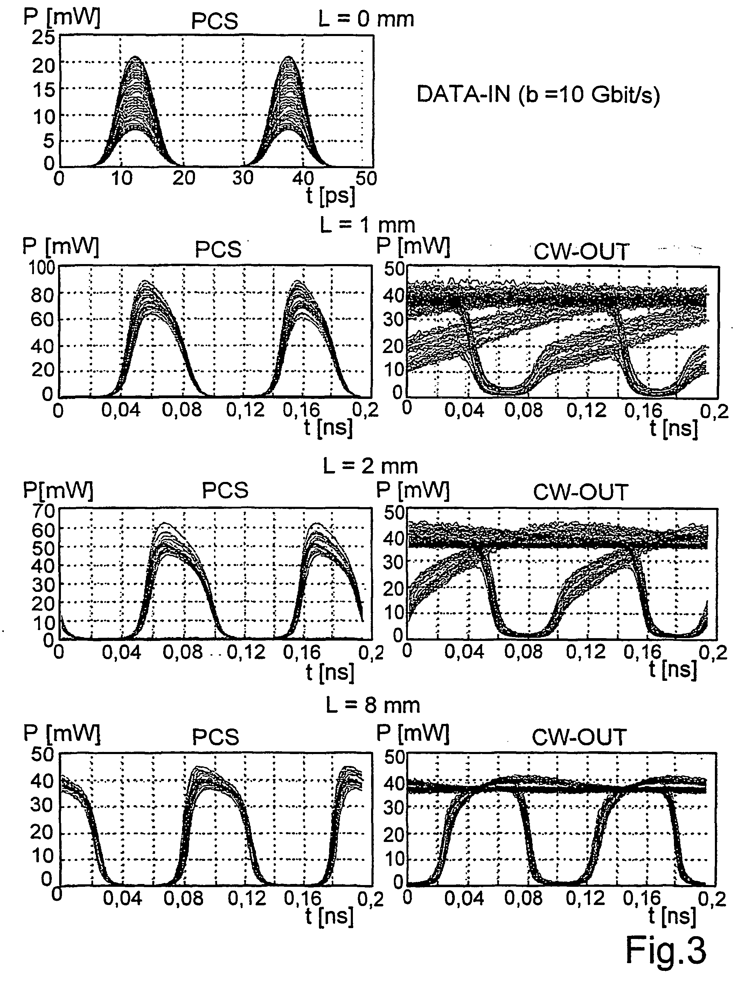

Der **Figur 3** ist derselbe Diagrammaufbau wie in Figur 2 zu entnehmen mit dem Unterschied, dass hier zu Vergleichszwecken eine Simulation für eine Übertragungsrate **b** von 10 Gbit/s durchgeführt wurde. Die Amplitudenvariation ist unverändert. Deutlich ist auch in dieser Darstellung für eine für zukünftige optische Anwendungen nicht relevante Datenrate zu erkennen, wie auch das unmodulierte Trägersignal **CW-OUT** durch Verschmälerung wesentlich verbessert wird.

Wenn das unmodulierte Trägersignal entfällt oder seine Leistung zu gering ist, kann keine Datenkopie erfolgen. Eine interaktive Kopplung zwischen den beiden Trägersignalen ist nicht möglich. Die Ausgangssignale können nicht moduliert und damit nicht in ihrer Qualität verbessert werden. Das (gefilterte) invertierte Trägersignal als Ausgangssignal zeigt nur ein Rauschen. Aus diesem Ergebnis kann abgeleitet werden, dass die Kopplung der Lichtstrahlen mit zueinander invertierten Signalen im reinoptischen Wellenleiterbauelement der Basisprozess für die bei der Erfindung erreichte schnelle Pulsbearbeitung ist.

Das Diagramm gemäß **Figur 4** zeigt den Verlauf der Verstärkung **gain** im reinoptischen Wellenleiterbauelement nach der Erfindung über der optischen Frequenz **f.** Dabei ist die nicht-lineare Verstärkungsunterdrückung im Kuppenbereich der Kurve, die eine Verschiebung der Sättigung bedingt, jedoch nicht weiter dargestellt. Die Kopplung zwischen dem primären Trägersignal **PCS,** dem eine der vorstehenden Signalkombinationen als Eingangssignal **CONTROL-IN** aufmoduliert ist, und dem unmodulierten Trägersignal **CW-IN** ist besonders gut, wenn die beiden Wellenlängen λ₁ und λ₂ so gewählt sind, dass eine identische Verstärkung erreicht wird. Diese bezüglich der charakteristischen Wellenlänge für maximal erreichbare Verstärkung symmetrische Wahl entspricht jedoch nicht der für einen bekannten Verstärker üblichen Wahl der Frequenz bzw. Wellenlänge für eine maximale Verstärkung **gain**_{**max**}, ist aber bei dem Wellenleiterbauelement mit sättigbarer Verstärkerregion nach der Erfindung eine von mehreren Bedingungen für die optimale Pulsaufbereitung. Bei solchen Asymmetrien können keine schnelle Verstärkeroperationen beobachtet werden. Die symmetrische Wahl der Verstärkungen für die Signale bei dem Wellenleiterbauelement nach der Erfindung gilt analog auch für die Wahl der Signalleistungen. Die Amplituden für die Wellen sind im Falle der schnellen Angleichung asymptotisch identisch. Nicht ausreichende Pulsformung ist entsprechend von einer Amplituden-Asymmetrie am Ausgang des Wellenleiterbauelements begleitet, die damit eine Detektorfunktion übemehmen kann.

In der **Figur 5** ist das schwellwertabhängige Schaltverhalten des Wellenleiterbauelements nach der Erfindung prinzipiell dargestellt, das ihn grundsätzlich zu einer Ausbildung als schneller Entscheider mit Schwellwertfunktion befähigt. Dargestellt ist ein allgemeiner Fall mit zwei unmodulierten Trägersignalen **CW-CONTROL, CW-OUT** mit unterschiedlichen Start-Amplituden, die auf die beiden Eingänge des Wellenleiterbauelements gegeben werden.) Die Anfangsleistung des Trägersignals **CW-OUT** beträgt immer 2,5 mW. Die Anfangsleistung des Trägersignals **CW-CONTROL** variiert dem gegenüber und ist immer größer als die Anfangsleistung des Trägersignals **CW-OUT.** Deutlich ist zu erkennen, dass immer das Signal mit der größeren Anfangsleistung sehr viel schneller über die Gesamtlänge des Wellenleiterbauelements anwächst als das Signal mit der kleineren Anfangsleistung. Am Ende des Wellenleiterbauelements wird dieses gegen Null gedrängt und unterdrückt.

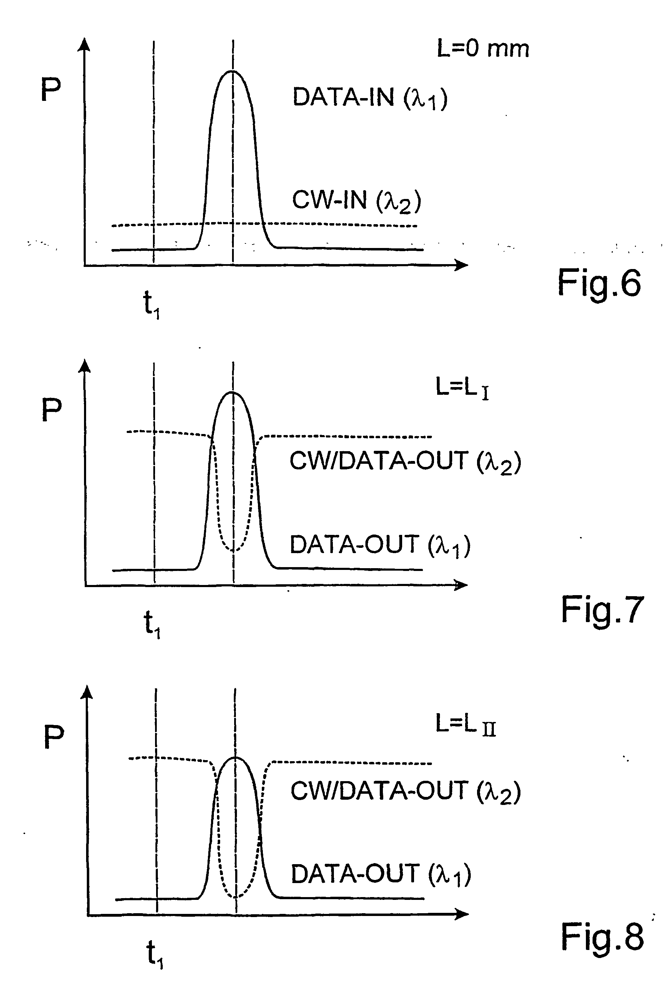

In den **Figuren 6, 7** und **8** ist das schwellwertabhängige Schaltverhalten des Wellenleiterbauelements für den Fall eines mit einem Datenpuls modulierten Eingangssignals **DATA-IN** der Wellenlänge λ₁ und eines unmodulierten Trägersignals **CW-IN** der Wellenlänge λ₂ an unterschiedlichen Stellen im Wellenleiterbauelement in time-domain-Spektren (Leistung P über der Zeit t) dargestellt.

Im Hinblick auf die praktische Anwendung des Schwellwertverhaltens in der optischen Nachrichtentechnik werden die beiden Eingangssignale **DATA-IN, CW-IN** zu den relativen Zeitpunkten **t**_{**1**} und **t**_{**2**} betrachtet (**Figur 6**). Zum Zeitpunkt **t**_{**1**} ist das **CW-IN-**Signal größer als das **DATA-IN**-Signal und wird daher stärker anwachsen als letzteres. Hier siegt also die Welle mit der Wellenlänge λ₂ über die Welle mit der Wellenlänge λ₁ . Im Zeitpunkt **t**_{**2**} liegen die Verhältnisse genau umgekehrt, und der Puls des **DATA-IN**-Signals wächst stärker als das **CW-IN-**Signal. Dadurch entsteht auf der Wellenlänge λ₂ (**Figur** 7) eine kleine Amplitude inmitten einer großen Amplitude, die somit einen dunklen Puls (häufig auch "inverser Puls" genannt) darstellt. Im weiteren Verlauf werden sich die maximalen Amplituden - bei gleicher Verstärkung für die beiden Wellen - auf gleiche Größe anpassen, wie in **Figur 8** dargestellt. Dadurch ist die Summe der Photonendichte im Wesentlichen konstant, was zu einer konstanten Ladungsträgerdichte am Ausgang des Wellenleiterbauelements führt. Daher spielt die Ladungsträgerlebensdauer hier keine Rolle und beschränkt nicht die Datenbitrate. Die Steigung der Signale hängt dabei nur von der materialabhängigen Zeitkonstanten der Verstärkungs-Sättigung ab. In diesem Zustand ist die maximale Extinktion des Wellenleiterbauelements erreicht.

Dieses Modell erklärt alle weiteren Funktionen des Wellenleiterbauelements in seinen bevorzugten Ausbildungen als schneller Equalizer **FEQ**, schneller Entscheider **FDE** etc. Dies soll an zwei Beispielen exemplarisch aufgezeigt werden. Wenn im Falle des schnellen Equalizers **FEQ** die Eingangsamplituden der Datensignalpulse unterschiedliche Höhen haben, aber alle größer als das unmodulierte Trägersignal sind, so werden sie zunächst alle (ungleichmäßig) wachsen, aber im Endstadium der Amplitudenangleichung auf eine gemeinsame Amplitude begradigt. Im Falle des schnellen Entscheiders **FDE** sind die Datenpulse jeweils zwischen den Taktpulsen angeordnet, sodass dort das unmodulierte Trägersignal stets kleiner ist. Fehlt jedoch ein Puls, so wird an dieser Stelle ein dunkler Pulse erzeugt. Dabei werden die Bits also invertiert ("1" in "0" und umgekehrt), aber es entstehen immer Pulse (keine dunklen Pulse). Für beide Prozesse wird das Wort "invers" benutzt. Um die beiden zu unterscheiden, wird hier nur bei einer "echten" Invertierung von "dunklen Pulsen" gesprochen.

In der **Figur 9** ist das zu den beiden Eingangssignalen **DATA-IN, CW-IN** zugehörige Vierwellen-Mischverhalten in einem sättigbaren, halbleitenden optischen Verstärker **SOA** (1550 nm) dargestellt. Die beiden eingehenden Signale **DATA-IN** (-0,5 THz) und **CW-IN** (+0,5 THz) werden als Nebenwellen an der Frequenzachse zu den Signalen **FWM1** (+1,5 THz) als höchster und FWM2 (-1,5 THz) als niedrigster Frequenz gespiegelt. Dabei findet von beiden Eingangssignalen ein absoluter Energieabtransport statt.

In den **Figuren 10** und **11** ist für eine Ausbildung des Verstärkers SOA als schneller Entscheider **FDE** zu erkennen, dass sich die Flankensteilheit der Pulse der beiden ausgehenden Signale **CONTROL-OUT** und **CW-OUT** im langen Verstärker **SOA** nicht mehr ändert und somit eine Erhaltungsgröße (Soliton) darstellt, die nur von der Zeitkonstanten τ_{ε} aufgrund der nicht-linearen Verstärkungsunterdrückung abhängt. Die **Figur 10** zeigt das Solitonverhalten nach der Pulswanderung durch einen sehr langen Verstärker **SOA** (**L** = 96 mm) bei einer Übertragungsrate b = 160 Gbit/s, die **Figur** 11 zum Vergleich bei b = 40 Gbit/s.

Bei der Ausbildung des Verstärkers **SOA** als schneller Entscheider **FDE** ist es ausschlaggebend, dass das Eingangssignal **CONTROL-IN,** das sich aus dem Datensignal **DATA-IN** und dem eng benachbarten Clocksignal **CLS** zusammensetzt, in der Verstärkung und in der Signalleistung symmetrisch zu dem unmodulierten Trägersignal **CW-IN** gewählt ist. In der **Figur 12** ist für diese drei Signale die Zeitabhängigkeit am Verstärkereingang (L = 0 mm) dargestellt. Das Datensignal **DATA-IN** und das Clocksignal **CLS** sind um eine halbe Bitperiode zueinander versetzt ("Clock-interleaved-Data" CiD) und weisen eine gleich große Signalleistung auf, das unmodulierte Trägersignal **CW-IN** weist dagegen eine sehr viel geringere Leistung auf. Bei einer genügend großen Nichtlinearität des Verstärkers **SOA** kann der Versatz auch gegen Null gehen oder sogar Null sein. Treten "1"- Pulse im Datensignal **DATA-IN** auf, so werden diese durch die zwischenliegenden "1"-Pulse des Clocksignals **CLS** noch verdichtet. Der als schneller Entscheider **FDE** ausgebildete Verstärker **SOA** invertiert diese als "0"-Puls auf das unmodulierte Trägersignal **CW-IN** (vgl. **Figur 13,** Entscheider-Ergebnisse bei **L** = 20 mm). Liegt dagegen zum Abtastzeitpunkt kein Datenpuls an, schaltet der schnelle Entscheider **FDE** einen dem an der Nullstelle liegenden Clockpuls entsprechenden invertierten Puls als "1"-Puls auf das unmodulierte Trägersignal **CW-OUT** durch, dessen Form damit nur von der Clockpulsform abhängt. Das vom schnellen Entscheider **FDE** durchgeschaltete invertierte Signal ist deshalb nicht nur wieder auf den ursprünglichen Datentakt zeitkorrigiert, sondern auch in seiner Pulsform entscheidend verbessert.

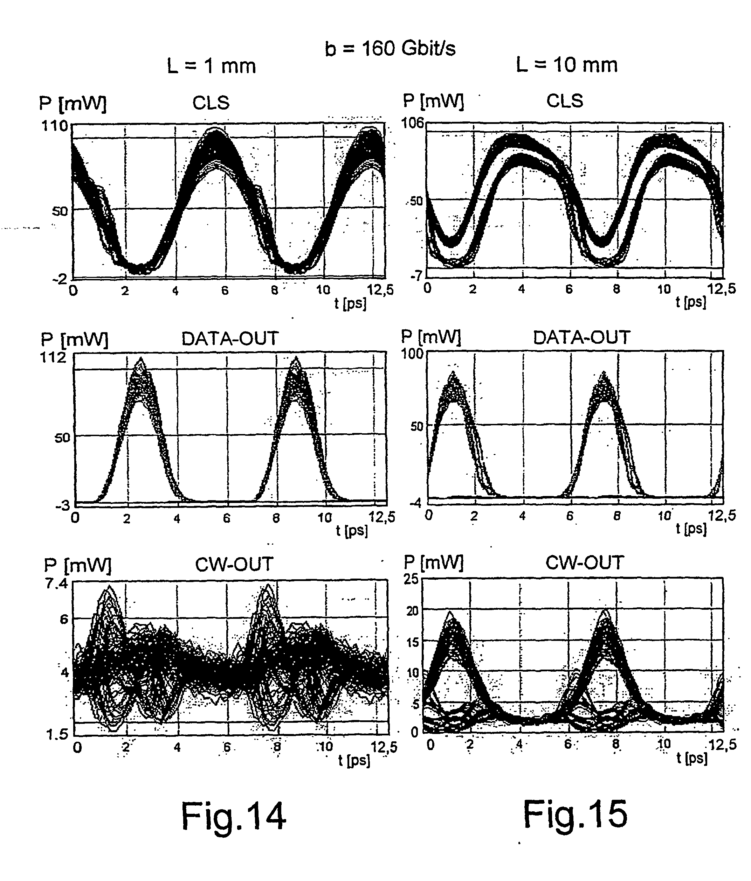

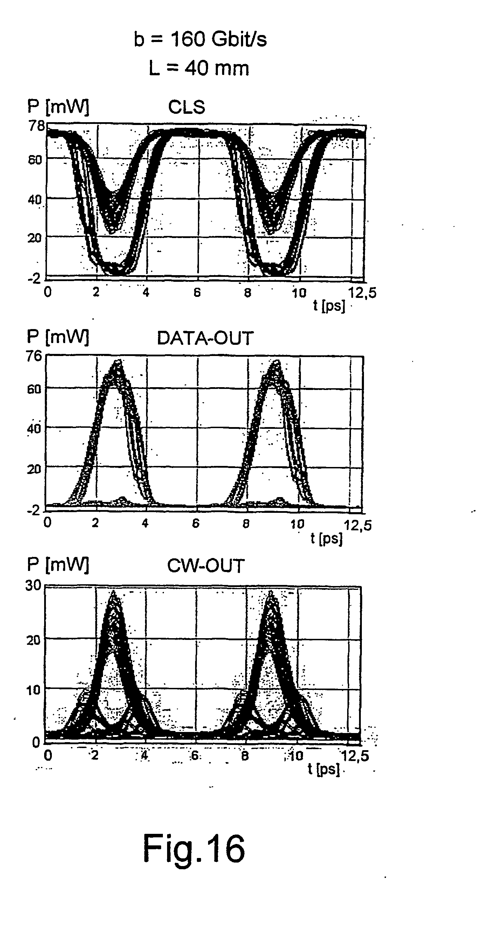

Analog zu den Figuren 2 und 3 sind in den **Figuren 14, 15** und **16** Augendiagramme für das Clocksignal **CLS,** das Datensignal **DATA-OUT** und das Ausgangssignal **CW-OUT** für den Verstärker **SOA** in der Ausbildung als schneller Entscheider **FDE** in Abhängigkeit von dessen Gesamtlänge **L** bei einer Übertragungsrate von 160 Gbit/s dargestellt. In der **Figur 14** ist zu erkennen, dass das Ausgangssignal **CW-OUT** bei einer Gesamtlänge **L** von 1 mm noch keine gute Pulsform zeigt. In der **Figur 15** für eine Gesamtlänge **L** von 10 mm ist hingegen deutlich ein Auge aufgrund der angeglichenen Pulsamplituden zu erkennen. (Die in der Darstellung erkennbare Aufspaltung des Clocksignals ist lediglich durch das angewendete Simulationsprogramm entstanden und ohne Bedeutung). Das Auge ist noch ausgeprägter bei einer steileren und höheren Pulsform gemäß **Figur 16** für eine Gesamtlänge **L** des Verstärkers **SOA** von 40 mm. Aus dieser Figur ist zu entnehmen, dass das reinoptische Wellenleiterbauelement nach der Erfindung in einer Ausbildung als schneller Entscheider **FDE** oder als schneller Equalizer **FEQ** seine Funktionen bei einer Gesamtlänge **L** ab 40 mm bereits sehr gut erfüllt, wenn die Eingangssignale eine ausreichende Qualität aufweisen. Bei schlechten Eingangssignalen bewirkt eine Verlängerung bis in den Bereich einer Gesamtlänge **L** von 80 mm noch weitere Verbesserungen. Damit weist das reinoptische Wellenleiterbauelement nach der Erfindung hervorragende 3R-Eigenschaften auf, ist moderat dimensionier- und flexibel einsetzbar.

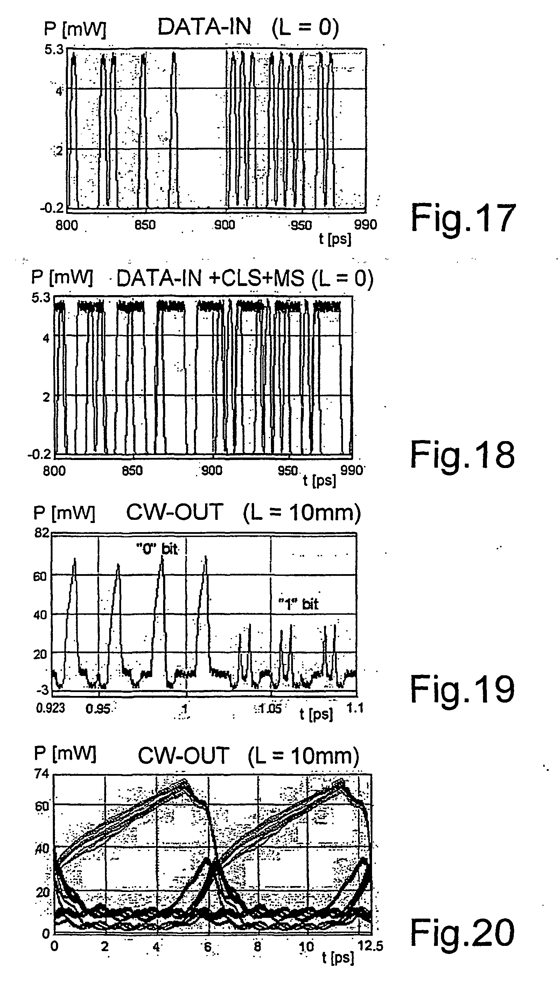

In der **Figur 17** sind in einem time-domain-Spektrum (Leistungsamplitude P in mW über der Zeit t in ps) für eine Ausbildung des schnellen Entscheiders **FDE** als schneller Demultiplexer **FDEMUX** das Datensignal **DATA-IN** und das synchronisierte Clocksignal **CLS** am Eingang des Verstärkers **SOA** (L= 0 mm) dargestellt. In der **Figur 18** kommt noch das Maskensignal **MS** hinzu. **Figur 19** zeigt bei einer Wellenleiterbauelement-Gesamtlänge **L** von 10 mm im Ausgangssignal **CW-OUT** die Transmission derjenigen Datenpulse (kleine Amplitude), die im Sperrbereich (große Amplitude) des Maskensignals **MS** liegen. Die Datenpulse (große Amplitude) hingegen, die innerhalb der durch das Maskensignal **MS** freigegebenen Schaltfenster (kleine Amplitude) liegen, werden als Demuxsignale erkannt. Das Ausgangssignal **CW-OUT** ist in der **Figur 20** als Augendiagramm dargestellt. Deutlich ist die gute Unterscheidbarkeit der "1"- und "0"-bits zu erkennen. Das auftretende große Auge zeigt die gute Angleichung der jeweiligen Signalamplituden durch das Wellenlefterbauelement nach der Erfindung . Auftretende Störungen liegen lediglich im Flankenbereich der Pulse.

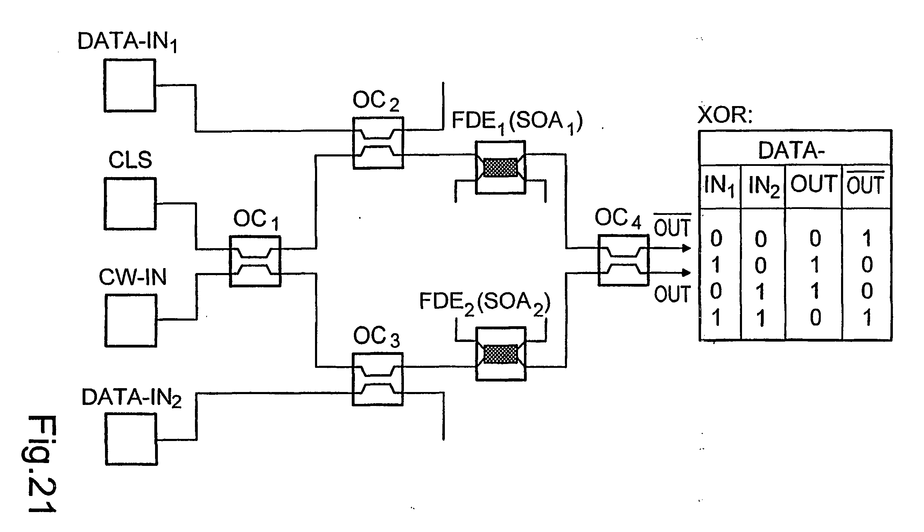

Eine schnelle Mach-Zehnder-Interferometer-Anordnung **FMZI** mit zwei integrierten sättigbaren halbleitenden optischen Verstärkern **SOA**_{**1**}**, SOA**_{**2**} als Wellenleiterbauelemente nach der Erfindung in der Funktion von schnellen Entscheidern **FDE**_{**1**}**, FDE**_{**2**} zur Realisierung eines schnellen logischen **XOR**-Elements ist in der **Figur 21** dargestellt. In einem ersten optischen Koppler **OC**_{**1**} des **FMZI** werden das unmodulierte Trägersignal **CW-IN** und das Clocksignal **CLS** überlagert und zwei Eingängen von zwei weiteren optischen Kopplern zugeführt. Über einen zweiten optischen Koppler **OC**_{**2**} wird das erste Datensignal **DATA-IN**_{**1**}**,** über einen dritten optischen Koppler **OC**_{**3**} wird das zweite Datensignal **DATA-IN**_{**2**} eingekoppelt. Die überlagerten Signale werden zwei parallel angeordneten schnellen Entscheidern **FDE**_{**1**}**, FDE**_{**2**} zugeführt, die diese aufarbeiten und entsprechend ihrer Schweflwertfunktion durchschalten oder sperren. Die ausgehenden Signale beider schneller Entscheider **FDE**_{**1**}**, FDE**_{**2**} werden einem vierten optischen Koppler **OC**_{**4**} zugeführt und dort überlagert. Handelt es sich um identische Eingangssignale, bleibt die von der schnellen Mach-Zehnder-Anordnung **FZMI** gebildete Brücke im Gleichgewicht und es wird kein Signal ("0"-bit) ausgegeben. Bei ungleichen Eingangssignalen liegt dagegen eine Verstimmung der Brücke vor, sodass ein Ausgangssignal ("1"-bit) ausgegeben wird. Damit realisiert die dargestellte schnelle Mach-Zehnder-Interferometer-Anordnung **FZMI** ein logisches Bauelement mit einer **XOR**-Funktion (vergleiche Tabelle für Ausgang und invertierten Ausgang). Durch eine Integration von schnellen Entscheidern, die auf dem Wellenleiterbauelement nach der Erfindung beruhen, in derartige Interferometer-Anordnungen können somit deren Funktionen verbessert ausgeführt werden. Der Vorteil liegt in der absoluten Highspeedfähigkeit und der gleichzeitigen guten 3R-Regeneration der optischen Pulse.

### Bezugszeichenliste

- **b**: Bitrate (b₀...bₘₐₓ)
- **CLS**: Clocksignal
- **CW-IN**: unmoduliertes Trägersignal, Eingang
- **CW-OUT**: verstärktes, moduliertes Ausgangssignal
- **CW-CONTROL**: unmoduliertes Eingangssignal
- **CONTROL-IN**: Eingangssignal
- **CONTROL-OUT**: verstärktes Ausgangssignal
- **DATA-IN**: Datensignal, Eingang
- **DATA-OUT**: Datensignal, Ausgang
- **FDE**: schneller Entscheider
- **FDEMUX**: schneller Demultiplexer
- **FMZI**: schnelle Mach-Zehnder-Interferometer-Anordnung
- **FEQ**: schneller Equalizer
- f: optische Frequenz
- **FVM**: Spiegelsignal
- **gain**: Verstärkung
- **L**: Verstärkerlänge gesamt
- **L**_{**I**}: Verstärkerlänge erster Abschnitt
- **L**_{**II**}: Verstärkerlänge zweiter Abschnitt
- **MS**: Maskensignal
- **MZI**: Mach-Zehnder-Interferometer-Anordnung
- **OC**: optischer Koppler
- **P**: optische Leistung
- **P**_{**CW**}: Leistung CW
- **P**_{**PCS**}: Leistung PCS
- **PCS**: primäres Trägersignal
- **SOA**: sättigbarer, halbleitender optischer Verstärker
- **t**: Zeit
- λ₁: Wellenlänge PCS / CONTROL-IN/OUT
- λ₂: Wellenlänge CW IN/OUT

## Patentansprüche

1. Reinoptisches Wellenleiterbauelement als Konverter mit einer sättigbaren Verstärkerregion für Datenpulse der Bitrate b in optischen Übertragungssystemen zur Aufmodulation eines Eingangssignals (CONTROL-IN), das einem primären Trägersignal (PCS) einer Wellenlänge λ₁ aufmoduliert ist, auf ein im Wellenleiterbauelement gleichlaufendes, am Eingang des Wellenleiterbauelements noch unmoduliertes Trägersignal (CW-IN) einer Wellenlänge λ₂, in der Form, dass am Ausgang des Wellenleiterbauelements ein verstärktes Ausgangssignal (CONTROL-OUT) der Wellenlänge λ₁ und ein verstärktes, moduliertes Ausgangssignal (CW-OUT) der Wellenlänge λ₂ zur Verfügung stehen, und mit einer Gesamtlänge (L) der Verstärkerregion, die größer als die für eine maximale Signalverstärkung bis in die Sättigung erforderliche Länge (L_{I}) ist,
**dadurch gekennzeichnet, dass**
die Gesamtlänge (L) im Bereich des Zehn- bis Hundertfachen der für eine Sättigung erforderlichen Länge (L_{I}) liegt, dass zur Erzeugung eines Schwellwertverhaltens das unmodulierte Trägersignal (CW-IN) am Eingang des Wellenleiterbauelements (SOA) eine gegenüber der Signalleistung (P_{PCS}) des primären Trägersignals (PCS) wesentlich geringere, aber deutlich von Null verschiedene, positive Signalleistung (P_{CW-IN}) aufweist und dass die Wellenlänge λ₁ des primären Trägersignals (PCS) und die Wellenlänge λ₂ des unmodulierten Trägersignals (CW-IN) symmetrisch zur charakteristischen Wellenlänge für die maximale Signalverstärkung des Wellenleiterbauelementes (SOA) gewählt sind, so dass sie im Wellenleiterbauelement (SOA) eine gleiche Verstärkung zur Erzielung einer Gleichheit der beiden Ausgangssignale (CONTROL-OUT, CW-OUT) in ihrer maximalen Amplitude erfahren.

2. Reinoptisches Wellenleiterbauelement nach Anspruch 1,
**dadurch gekennzeichnet, dass**
dieses in Form eines sättigbaren, halbleitenden optischen Verstärkers (SOA) oder in Form einer nichtlinearen Glasfaser mit einer Raman-Verstärkung ausgebildet ist.

3. Reinoptisches Wellenleiterbauelement nach Anspruch 1 oder 2,
**dadurch gekennzeichnet, dass**
bei dessen Ausbildung als schneller Equalizer (FEQ) zur synchronen Amplitudenangleichung und Putsformung beider Ausgangssignale (CONTROL-OUT, CW-OUT) das Eingangssignal (CONTROL-IN) ein Datensignal (DATA-IN) mit unterschiedlichen Datenpulshöhen und einer bis zu ultrahohen Bitrate bₘₐₓ ist.

4. Reinoptisches Wellenleiterbauelement nach einem der Ansprüche 1 bis 3,
**dadurch gekennzeichnet, dass**
bei dessen Ausbildung als schneller Entscheider (FDE) zum Pulsschalten das Eingangssignal (CONTROL-IN) aus einem Datensignal (DATA-IN) mit einer bis zu ultrahohen Bitrate bₘₐₓ und einem Clocksignal (CLS) zusammengesetzt ist, das zum Datensignal (DATA-IN) mit einem Versatz von einem Bruchteil, insbesondere der Hälfte, der Bitperiode synchronisiert ist und eine zum Datensignal (DATA-IN) ähnliche Signalleistung aufweist.

5. Reinoptisches Wellenleiterbauelement nach Anspruch 4,
**dadurch gekennzeichnet, dass**
das Clocksignal (CLS) mittels eines selbstpulsierenden Mehrsektionslaser frequenzstabil regeneriert wird.

6. Reinoptisches Wellenleiterbauelement nach Anspruch 4 oder 5,
**dadurch gekennzeichnet, dass**
bei einer Ausbildung des schnellen Entscheiders (FDE) als schneller Demultiplexer (FDEMUX) das Clocksignal (CLS) von einem Maskensignal (MS) ähnlicher Signalleistung überlagert ist, das den Schalttakt für das Schaltfenster des schnellen Demultiplexers (FDEMUX) vorgibt.

7. Reinoptisches Wellenleiterbauelement nach Anspruch 4 oder 5,
**dadurch gekennzeichnet, dass**
dieses zusammen mit einem weiteren Wellenleiterbauelement (SOA) als schnelle Entscheider (FDE) in eine nichtlineare Mach-Zehnder-Interferometer-Anordnung (FMZI) oder in eine dieser ähnliche gleichläufige Interferometer-Anordnung integriert sind.

8. Reinoptisches Wellenleiterbauelement nach einem der Ansprüche 1 bis 7,
**dadurch gekennzeichnet, dass**
dieses zusammen mit weiteren Wellenleiterbauelementen derselben Ausbildung unter Zwischenschaltung von optischen Isolatoren in einer linearen Kaskade mit geringen Kopplungsverlusten zwischen den einzelnen sättigbaren, halbleitenden optischen Verstärkern angeordnet ist, wobei diese an ihren beiden Enden gute Entspiegelungen zur Vermeidung von Reflexionseffekten aufweisen.

9. Verwendung eines reinoptischen Wellenleiterbauelements als Konverter mit einer sättigbaren Verstärkerregion in der Ausbildung eines schnellen Equalizers gemäß einem der Ansprüche 1 bis 3 als Vorschalteinrichtung mit einer freien Wahl der Wellenlängen und der Polarisationsebene der Trägersignale sowie der Verbesserung der Amplitude und Form der Datenpulse für einen reinoptischen Schaltkreis.

10. Verwendung eines reinoptischen Wellenleiterbauelements als Konverter mit einer sättigbaren Verstärkerregion nach Anspruch 9 als Polarisationskonverter mit fester Ausgangspolarisation für Datensignale mit unterschiedlichen Datenpulshöhen und bis zu ultrahoher Bitrate bₘₐₓ.

11. Verwendung eines reinoptischen Wellenleiterbauelements als Konverter mit einer sättigbaren Verstärkerregion nach einem der Ansprüche 1 bis 5 in der Ausbildung eines schnellen Equalizers und/oder Entscheiders in einem 3R-Generator für bis zu ultahohe Bitraten bₘₐₓ in einem reinoptischen Schaltkreis.

## Claims

1. All-optical waveguide component as a converter with a saturable amplifier region for data pulses of bit rate b in optical transmission systems for modulating an input signal (CONTROL-IN), which is modulated on a primary carrier signal (PCS) with a wavelength λ₁, onto a carrier signal (CW-IN) with a wavelength λ₂, which co-propagates in the waveguide component and is still unmodulated at the input of the waveguide component, in such a way that an amplified output signal (CONTROL-OUT) of wavelength λ₁ and an amplified, modulated output signal (CW-OUT) of wavelength λ₂ are provided at the output of the waveguide component, and with an overall length (L) of the amplifier region which is greater than the length (L_{I}) required for maximum signal gain up to saturation,
**characterised in that**
the overall length (L) is in the range of from ten to one hundred times the length (L_{I}) required for saturation, **in that** the unmodulated carrier signal (CW-IN) at the input of the waveguide component (SOA) has a substantially lower but significantly non-zero positive signal power (P_{CW_IN}) compared with the signal power (P_{PCS}) of the primary carrier signal (PCS) in order to generate a threshold response, and **in that** the wavelength λ₁ of the primary carrier signal (PCS) and the wavelength λ₂ of the unmodulated carrier signal (CW-IN) are selected symmetrically with respect to the characteristic wavelength for the maximum signal gain of the waveguide component (SOA), so that they experience equal amplification in the waveguide component (SOA) in order to achieve equality of the two output signals (CONTROL-OUT, CW-OUT) in terms of their maximum amplitude.

2. All-optical waveguide component according to Claim 1,
**characterised in that**
it is designed in the form of a saturable semiconducting optical amplifier (SOA) or in the form of a nonlinear glass fibre with Raman amplification.

3. All-optical waveguide component according to Claim 1 or 2,
**characterised in that**
when it is designed as a fast equaliser (FEQ) for synchronous amplitude matching and pulse shaping of the two output signals (CONTROL-OUT, CW-OUT), the input signal (CONTROL-IN) is a data signal (DATA-IN) with different data pulse levels and up to an ultrahigh bit rate bₘₐₓ.

4. All-optical waveguide component according to one of Claims 1 to 3,
**characterised in that**
when it is designed as a fast decider (FDE) for pulse switching, the input signal (CONTROL-IN) is composed of a data signal (DATA-IN) with up to an ultrahigh bit rate bₘₐₓ and a clock signal (CLS), which is synchronised with an offset of a fraction, in particular half of the bit period with respect to the data signal (DATA-IN) and has a similar signal power to the data signal (DATA-IN).

5. All-optical waveguide component according to Claim 4,
**characterised in that**
the clock signal (CLS) is regenerated in a frequency-stable way by means of a self-pulsing multisection laser.

6. All-optical waveguide component according to Claim 4 or 5,
**characterised in that**
when the fast decider (FDE) is designed as a fast demultiplexer (FDEMUX), a mask signal (MS) of similar signal power is superimposed on the clock signal (CLS) and dictates the switching rate for the switching window of the fast demultiplexer (FDEMUX).

7. All-optical waveguide component according to Claim 4 or 5,
**characterised in that**
it is integrated with a further waveguide component (SOA) as a fast decider (FDE) in a nonlinear Mach-Zehnder interferometer arrangement (FMZI) or in a co-propagative interferometer arrangement similar thereto.

8. All-optical waveguide component according to one of Claims 1 to 7,
**characterised in that**
it is arranged together with further optical components of the same design, with the interposition of optical isolators in a linear cascade with low coupling losses between the individual saturable, semiconducting optical amplifiers, the latter having good antireflection at their two ends in order to avoid reflection effects.

9. Use of an all-optical waveguide component as a converter with a saturable amplifier region in the design of a fast equaliser according to one of Claims 1 to 3 as a ballast device with free selection of the wavelengths and the polarisation plane of the carrier signals and improvement of the amplitude and shape of the data pulses for an all-optical circuit.

10. Use of an all-optical waveguide component as a converter with a saturable amplifier region according to Claim 9 as a polarisation converter with a fixed output polarisation for data signals with different data pulse levels and up to an ultrahigh bit rate bₘₐₓ.

11. Use of an all-optical waveguide component as a converter with a saturable amplifier region according to one of Claims 1 to 5 in the design of a fast equaliser and/or decider in a 3R generator for up to an ultrahigh bit rate bₘₐₓ in an all-optical circuit.

## Revendications

1. Composant guide d'onde purement optique utilisé en tant que convertisseur, comprenant une zone d'amplification pouvant être saturée pour des impulsions de données de débit binaire b dans des systèmes de transmission optiques pour la modulation d'un signal d'entrée (CONTROL-IN), qui est modulé sur un signal porteur primaire (PCS) d'une longueur d'onde λ₁, sur un signal porteur (CW-IN) commun dans le composant guide d'onde, pas encore modulé à l'entrée du composant guide d'onde, d'une longueur d'onde λ₂, de manière à ce qu'un signal de sortie amplifié (CONTROL-OUT) de longueur d'onde λ₁ et un signal de sortie modulé amplifié (CW-OUT) de longueur d'onde λ₂ soient disponibles à la sortie du composant guide d'onde, et avec une longueur totale (L) de la zone d'amplification supérieure à la longueur nécessaire à une amplification de signal maximale jusqu'à saturation (L₁),
**caractérisé en ce que**
la longueur totale (L) est comprise entre dix et cent fois la longueur nécessaire pour une saturation (L₁), pour générer un comportement de valeur de seuil, le signal porteur non modulé (CW-IN), à l'entrée du composant guide d'onde (SOA), présente une puissance de signal positive (P_{CW-IN}) beaucoup plus faible mais nettement différente de zéro par rapport à la puissance de signal (P_{PCS}) du signal porteur primaire (PCS), et la longueur d'onde λ₁ du signal porteur primaire (PCS) et la longueur d'onde λ₂ du signal porteur non modulé (CW-IN) sont choisies symétriques par rapport à la longueur d'onde caractéristique pour l'amplification de signal maximale du composant guide d'onde (SOA), de telle sorte que dans le composant guide d'onde (SOA), ils subissent une amplification identique pour atteindre une égalité des deux signaux de sortie (CONTROL-OUT, CW-OUT) au niveau de leur amplitude maximale.

2. Composant guide d'onde purement optique selon la revendication 1,
**caractérisé en ce que**
celui-ci est configuré sous la forme d'un amplificateur optique (SOA) semi-conducteur pouvant être saturé, ou sous la forme d'une fibre de verre non linéaire dotée d'une amplification Raman.

3. Composant guide d'onde purement optique selon la revendication 1 ou 2,
**caractérisé en ce que**
dans sa configuration en tant qu'égalisateur rapide (FEQ) pour l'égalisation d'amplitude synchrone et la formation d'impulsions des deux signaux de sortie (CONTROL-OUT, CW-OUT), le signal d'entrée (CONTROL-IN) est un signal de données (DATA-IN) avec des hauteurs d'impulsions de données différentes et un débit binaire allant jusqu'à ultra haut bₘₐₓ.

4. Composant guide d'onde purement optique selon l'une quelconque des revendications 1 à 3, **caractérisé en ce que**
dans sa configuration en tant que décideur rapide (FDE) pour l'activation des impulsions, le signal d'entrée (CONTROL-IN) se compose d'un signal de données (DATA-IN) ayant un débit binaire allant jusqu'à ultra haut bₘₐₓ et d'un signal d'horloge (CLS), qui est synchronisé par rapport au signal de données (DATA-IN) avec un décalage d'un quantile, en particulier la moitié de la période binaire, et présente une puissance de signal similaire à celle du signal de données (DATA-IN).

5. Composant guide d'onde purement optique selon la revendication 4,
**caractérisé en ce que**
le signal d'horloge (CLS) est régénéré de façon stable en termes de fréquence au moyen d'un laser multisections à auto-impulsion.

6. Composant guide d'onde purement optique selon la revendication 4 ou 5,
**caractérisé en ce que**
dans une configuration du décideur rapide (FDE) en tant que démultiplexeur rapide (FDEMUX), le signal d'horloge (CLS) est recouvert par un signal de masquage (MS) d'une puissance de signal similaire, qui prédétermine le rythme de commutation pour la fenêtre de commutation du démultiplexeur rapide (FDEMUX).

7. Composant guide d'onde purement optique selon la revendication 4 ou 5,
**caractérisé en ce que**
celui-ci, conjointement avec un autre composant guide d'onde (SOA) en tant que décideur rapide (FDE), est intégré dans un dispositif d'interféromètre de Mach-Zehnder non linéaire (FMZI) ou est intégré dans un dispositif d'interféromètre commun similaire à celui-ci.

8. Composant guide d'onde purement optique selon l'une quelconque des revendications 1 à 7,
**caractérisé en ce que**
celui-ci, conjointement avec d'autres composants guides d'onde ayant la même configuration, est disposé par l'intermédiaire d'isolateurs optiques en une cascade linéaire avec de faibles pertes de couplage entre les amplificateurs optiques semi-conducteurs individuels pouvant être saturés, ces derniers présentant à leurs deux extrémités de bonnes propriétés antireflets pour éviter les effets de réflexion.

9. Utilisation d'un composant guide d'onde purement optique en tant que convertisseur, comprenant une zone d'amplification pouvant être saturée, sous la forme d'un égalisateur rapide, selon l'une quelconque des revendications 1 à 3, en tant que dispositif amont avec un libre choix des longueurs d'ondes et du niveau de polarisation des signaux porteurs ainsi que de l'amélioration de l'amplitude et de la forme des impulsions de données pour un circuit purement optique.

10. Utilisation d'un composant guide d'onde purement optique en tant que convertisseur, comprenant une zone d'amplification pouvant être saturée, selon la revendication 9, en tant que convertisseur de polarisation avec une polarisation de sortie fixe pour des signaux de données ayant des hauteurs d'impulsions de données différentes et un débit binaire allant jusqu'à ultra haut bₘₐₓ.

11. Utilisation d'un composant guide d'onde purement optique en tant que convertisseur, comprenant une zone d'amplification pouvant être saturée, selon l'une quelconque des revendications 1 à 5, sous la forme d'un égalisateur et/ou décideur rapide dans un générateur 3R pour des débits binaires allant jusqu'à ultra haut bₘₐₓ dans un circuit purement optique.
